# EUROPEAN PATENT APPLICATION

(11) **EP 2 574 949 A2**
(43) Date of publication of application: **03.04.2013**
(21) Application number: 12186321.1
(22) Date of filing: 27.09.2012
(51) Int. Cl.: G01R 31/40

(54) **Photovoltaic panel diagnosis device, method and program**

(30) Priority: 30.09.2011 JP 2011218463; 30.09.2011 JP 2011218461; 30.01.2012 JP 2012017377
(71) Applicant: Kabushiki Kaisha Toshiba, Minato-ku, Tokyo 105-8001 (JP)
(72) Inventor: Noda, Etsuo, Tokyo, Tokyo 105-0014 (JP); Asayama, Masahiro, Tokyo, Tokyo 105-8001 (JP); Hasegawa, Yoshiaki, Tokyo, Tokyo 105-8001 (JP); Wakamatsu, Kengo, Tokyo, Tokyo 105-8001 (JP)
(74) Representative: Fritsche, Daniel

(57) **Abstract**

Photovoltaic (PV) panel diagnosis for determining a deteriorated panel in a string of a solar power generation system. The PV panel diagnosis device (100) includes an adjusting unit (110) that adjusts an impedance for a PV panel circuit connected with a plurality of PV panels, a measured-value storing unit (311) that stores, as a measured value, a voltage or a current measured through the PV panel circuit in accordance with a change in the impedance, a change-amount determining unit (221) that determines a change amount of the voltage or the current based on the measured value in accordance with the change in the impedance, and a specifying unit (222) that specifies a deteriorated PV panel based on a comparison result of the change amount with a predetermined threshold.

## Description

This application is based upon and claims the benefit of priority from Japanese Patent Application No. 2011-218461 and 2011-218463, filed September 30, 2011, and Japanese Patent Application No. 2012-017377, filed January 30, 2012 ; the entire contents all of which are incorporated herein by reference.

### FIELD

Embodiments described herein relate generally to, for example, diagnosis of a deterioration of a PV panel in a power generation system which has a plurality of solar battery panels (hereinafter, referred to as PV panels) connected in series, parallel, or series-parallel.

### BACKGROUND

Solar power generation utilizing PV panels is now getting attention as a power generation scheme having little CO₂ generation. However, the output per a typical PV panel is equal to or smaller than several hundred W. Accordingly, practical power generation systems utilizing PV panels generally have a plurality of PV panels connected in series or parallel.

Such power generation systems are configured to obtain desired electric power by connecting the PV panels to a device called PCS (Power Conditioning System). The PCS basically has an inverter function for DC-AC conversion. Moreover, the PCS also has a function (MPPT: Maximum Power Point Tracker) of tracking an operation point (MPP: Maximum Power Point) where the output electrical power becomes the maximum.

In large-scale power generation systems, a string having a plurality of PV panels connected in series is configured and a plurality of such strings is connected in parallel. When those strings are connected to a PCS, a power generation system that can obtain large electric power is configured.

PV panels cause reduction in output and defects along with ages. However, because of the varying in the quality of PV panels and the difference in a place where the PV panel is placed, etc., the level of the output reduction and the duration until a defects occurs vary.

Conversely, according to a power generation system configured by a plurality of PV panels, when merely one or two PV panels become defective or decrease outputs, the whole output may largely decrease in some cases.

For example, providing that a string is configured by a series circuit of 18 PV panels, two PV panels are deteriorated (output is reduced to 84 % of normal panels) in such a string. In this case, the reduction rate is 97 % when all outputs by respective panels (16 normal panels and 2 deteriorated panels) are simply totaled. In practice, however, the output by the power generation system may be largely reduced to 88 % in some cases.

### (Japanese Patent Application Publication No. 2011-170835)

Because of the above-explained reason, it is very important to find out a deteriorated panel in the system in order to maintain the whole output. For example, it is possible to measure the operating voltage of each PV panel, and to specify, as a deteriorated panel, a PV panel that has an operation voltage, i.e., an output largely reduced in comparison with other PV panels.

Conversely, the PCS performs a control in such a way that the reduction in operating voltage by the deteriorated panel is compensated and the output becomes optimized in an MPPT operation. Hence, reduction in output cannot be easily found in comparison with other normal PV panels, but such a deteriorated PV panel may cause reduction in output by the other normal PV panels.

Such a deteriorated panel (hereinafter, referred to as a potentially deteriorated panel in some cases) has an output reduction which is equal to or smaller than several % in comparison with other normal panels when the system is performing an MPPT operation. Accordingly, it is difficult to precisely specify a deteriorated panel only through a voltage measurement at the time of operation. That is, according to the PV panel diagnosis technologies conventionally proposed, it is difficult to precisely find a deteriorated panel in a series or parallel circuit.

The present invention has been made in order to address the above-explained conventional technical issue, and it is an object of the present invention to provide a PV panel diagnosis technology that can surely find a deteriorated panel in a solar power generation system.

To accomplish the above object, according to an aspect of the present invention, a PV panel diagnosis device includes following technical features.
(1) An adjusting unit that adjusts impedance for a PV panel circuit connected with a plurality of PV panels.
(2) A measured-value storing unit that stores, as a measured value, a voltage or a current measured through the PV panel circuit in accordance with a change in the impedance by the adjusting unit.
(3) A specifying unit which specifies a deteriorated PV panel based on a comparison result of the measured value in accordance with the change in the impedance by the adjusting unit or a change amount of the measured value with a predetermined threshold, and which also specifies a string comprising the plurality of PV panels connected in series and including the deteriorated panel.

According to the other aspects of the present invention, respective functions of the above-explained technical features can be realized by, for example, a method executed by a computer or an electronic circuit or a program run by a computer.

### BRIEF DESCRIPTION OF THE DRAWINGS

FIG. 1 is a schematic configuration diagram showing a power generation system according to a first embodiment of the present invention;
FIG. 2 is a functional block diagram showing a configuration according to the first embodiment;
FIG. 3 is a diagram showing I-V characteristics of a normal panel and deteriorated panels D1 and D2;
FIG. 4 is a diagram showing an I-V characteristic of a string;
FIG. 5 is a diagram showing an output by a string configured by normal panels and an output by a string including a deteriorated panel in a comparative manner;
FIG. 6 is a diagram showing an operating voltage of each PV panel at the time of an MPPT operation;
FIG. 7 is a diagram showing an operating voltage of each PV panel and a recovery predicted value of an output by a string when a current flowing through the string is changed;
FIG. 8 is a flowchart showing a process procedure according to the first embodiment;
FIG. 9 is a schematic configuration diagram showing a power generation system according to a second embodiment of the present invention;
FIG. 10 is a schematic configuration diagram showing a power generation system according to a third embodiment of the present invention;
FIG. 11 is a schematic configuration diagram showing a power generation system according to a fourth embodiment of the present invention;
FIG. 12 a flowchart showing a process procedure according to the fourth embodiment;
FIG. 13 is a schematic configuration diagram showing a power generation system according to a fifth embodiment of the present invention;
FIG. 14 is a functional block diagram showing a configuration according to the fifth embodiment;
FIG. 15 is a schematic configuration diagram showing a power generation system according to a sixth embodiment of the present invention;
FIG. 16 is a schematic configuration diagram showing a power generation system according to a seventh embodiment of the present invention;
FIG. 17 is a schematic configuration diagram showing a power generation system according to an eighth embodiment of the present invention;
FIG. 18 is a functional block diagram showing a configuration according to the eighth embodiment;
FIG. 19 is a diagram showing a DC-DC converter added with a through circuit;
FIG. 20 is a flowchart showing a process procedure according to the eighth embodiment;
FIG. 21 is a functional block diagram showing a configuration according to a ninth embodiment of the present invention;
FIG. 22 is a functional block diagram showing an example configuration of a PCS;
FIG. 23 is a diagram showing a booster DC-DC converter;
FIG. 24 is a diagram showing a booster DC-DC converter added with a parallel diode;
FIG. 25 is a diagram showing a step-down DC-DC converter; FIG. 26 is a diagram showing an I-V characteristic of a string;
FIG. 27 is a diagram showing a change in voltage and current of a string subjected to a through operation and a change in voltage and current of a string subjected to a converter operation;
FIG. 28 is a diagram showing a voltage at a PV-panel side of a string subjected to a through operation and that of a string subjected to a converter operation when different booster ratios are set;
FIG. 29 is a diagram showing a current at a PV-panel side of a string subjected to a through operation and that of a string subjected to a converter operation when different booster ratios are set;
FIG. 30 is a flowchart showing a procedure of a variable range determining process according to an embodiment of the present invention;
FIG. 31 is a schematic configuration diagram showing an example configuration having a diode omitted in the form shown in FIG. 15; and
FIG. 32 is a schematic configuration diagram showing an example impedance adjusting circuit using a capacitor and a switch.
FIG. 33 is a diagram showing changes in a capacitor voltage and in a string voltage at the time of measurement;
FIG. 34 is a diagram showing another configuration of an impedance adjusting circuit;
FIG. 35 is a diagram showing the other configuration of an impedance adjusting circuit;
FIG. 36 is a diagram showing an example impedance adjusting circuit using a semiconductor switch and a relay for a switch;
FIG. 37 is a diagram showing an example impedance adjusting circuit connected with a backflow preventing diode in the circuit;
FIG. 38 is a diagram showing an example impedance adjusting circuit having a capacitor commonly shared by a plurality of strings;
FIG. 39 is a diagram showing another configuration of an impedance adjusting circuit having a capacitor commonly shared by a plurality of strings;
FIG. 40 is a diagram showing the other configuration of an impedance adjusting circuit having a capacitor commonly shared by a plurality of strings; and
FIG. 41 is a diagram showing yet other configuration of an impedance adjusting circuit having a capacitor commonly shared by a plurality of strings.

### DETAILED DESCRIPTION

### [A. First Embodiment]

### [1. Configuration]

### [Configuration of Power Generation system]

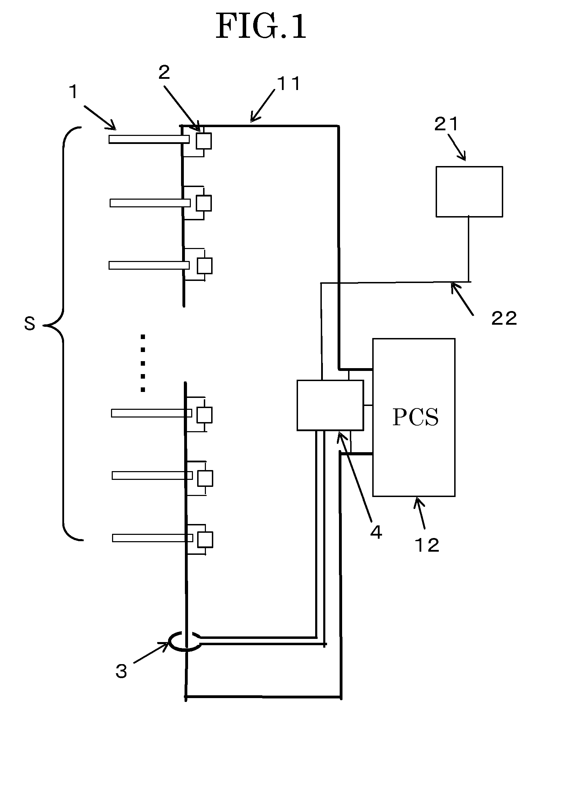

An explanation will now be given of a configuration of a power generation system according to an embodiment of the present invention with reference to the schematic configuration diagram of FIG. 1. The power generation system includes a string S, voltage monitors 2, a current measuring terminal 3, a controller 4, a PCS 12, and a server device 21. Respective units will be explained in more detail.

### [String]

The string S is, as explained above, a PV panel circuit having a plurality of PV panels 1 connected in series. The PV panel 1 outputs power by solar light, and includes all solar battery panels available currently or in future. The number of PV panels 1 in each string S is optional.

### [Voltage Monitor]

Each voltage monitor 2 is connected in parallel with the circuit of each PV panel 1, and detects, as a measured value, an operating voltage of each PV panel 1.

### [Current Measuring Terminal]

The current measuring terminal 3 detects, as a measured value, a current value flowing through the series circuit of the string S. An example current measuring terminal 3 available is a CT (Current Transformer). However, a resistor may be put in the circuit in series, and a current value may be calculated by measuring a voltage across both terminals of such a resistor. The current value can be obtained from the PCS 12.

### [Controller]

The controller 4 is connected to the current measuring terminal 3 and receives the measured value from the current measuring terminal 3. Moreover, the controller 4 receives respective measured values from the voltage monitors 2 and controls each voltage monitor 2. The control for the voltage monitor 2 and the transmission/reception of the measured value transmitted from the voltage monitor 2 can be carried out through a power line indicated by a reference numeral 11 in the figures. Data exchange lines for a communication other than the communication through the power line 11 may be additionally provided between the voltage monitor 2 and the controller 4, and data may be exchanged through a wireless LAN.

### [PCS]

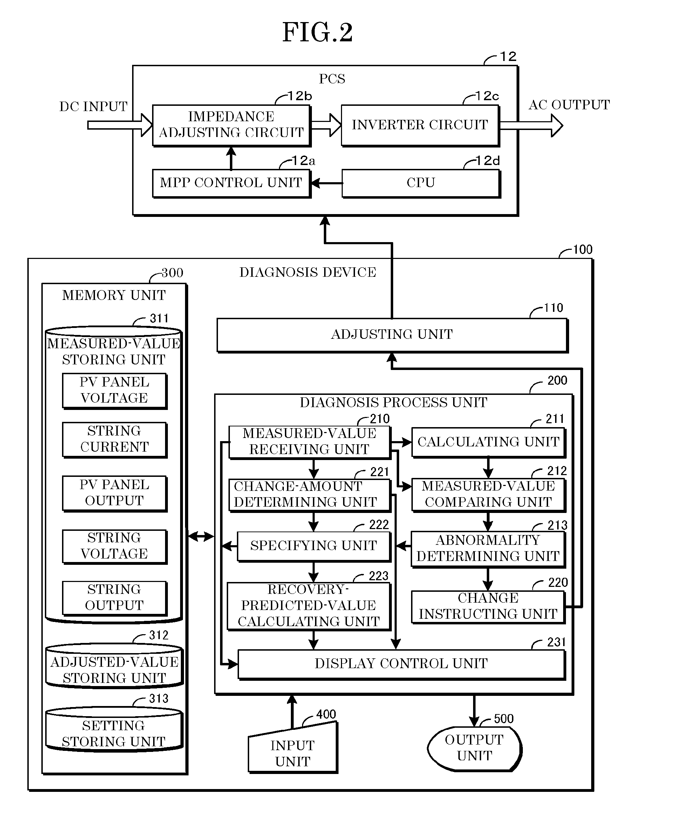

The PCS 12 is a power control device connected to the power line 11. The PCS 12 includes, for example, an MPP control unit 12a, an impedance adjusting circuit 12b, an inverter circuit 12c, and a CPU 12d (see FIG. 2). The MPP control circuit 12a executes the above-explained MPPT operation. The impedance adjusting circuit 12b adjusts the input impedance of the PCS 12. Accordingly, the load impedance of the PV panel circuit is adjusted. The inverter circuit 12c converts DC power into AC power. The CPU 12d controls the whole PCS 12.

### [Server Device]

The server device 21 is a computer which is connected to the controller 4 and the PCS 12 through network cables 22 and which can exchange information therewith. Information on this power generation system is available for the host monitoring device, etc., through the server device 21.

### [Configuration of Diagnosis Device]

An explanation will now be given of a configuration of a PV panel diagnosis device (hereinafter, simply referred to as a diagnosis device) that diagnoses the above-explained power generation system with reference to FIG. 2. The diagnosis device 100 is connected to the PCS 12, and the controller 4 through unillustrated cables, and can exchange information therewith.

The diagnosis device 100 includes an adjusting unit 111, a diagnosis process unit 200, a memory unit 300, an input unit 400, and an output unit 500, etc. The adjusting unit 111 causes the impedance adjusting circuit 12b of the PCS 12 to adjust the impedance. The diagnosis process unit 200 diagnoses the PV panels 1 and the string S based on various measured values. The diagnosis process unit 200 includes a measured-value receiving unit 210, a calculating unit 211, a measured-value comparing unit 212, an abnormality determining unit 213, a change instructing unit 220, a change-amount determining unit 221, a specifying unit 222, a recovery-predicted-value calculating unit 223, and a display control unit 231, etc.

The measured-value receiving unit 210 receives a measured value from the controller 4. The measured value received by the measured-value receiving unit 210 is stored in the memory unit 300 to be discussed later.

The calculating unit 211 executes various arithmetic operations based on the measured value. For example, the calculating unit 211 obtains a PV panel output and a string output based on a PV panel voltage and a string current. Moreover, the calculating unit 211 obtains a string voltage based on the PV panel voltage. The calculating unit 211 is also capable of obtaining a threshold value to be discussed later.

The controller 4 may include the calculating unit 211 and the measured-value receiving unit 210 may receive a calculation result. In this embodiment, it is presumed that the above-explained calculation result is included in the measured value. The measured value that is a calculation result is stored in the memory unit 300 to be discussed later.

The measured-value comparing unit 212 compares the output by the PV panel 1 and that of the string S with respective reference normal values. Such normal values can be set in advance, or in consideration of a fact that a sunshine condition, etc., changes, normal PV panel 1 and string S are determined based on the principle of majority rule, respective measured value of such normal PV panel and string may be adopted as normal values. The abnormality determining unit 213 determines the abnormality of the PV panel 1 and that of the string S based on a comparison result by the measured-value comparing unit 212.

The change instructing unit 220 instructs the adjusting unit 111 to change the load impedance of the PV panel circuit. The change instructing unit 220 of this embodiment instructs to change the current of the strings S.

The change-amount determining unit 221 determines the change amount of the measured value of each PV panel 1 when the load impedance of the string S is changed. The change-amount determining unit 221 of this embodiment determines the change amount in the voltage of the PV panel 1. The specifying unit 222 specifies the deteriorated panel or the string S including the deteriorated panel based on a determination result by the change-amount determining unit 221. The specifying unit 222 may specify the deteriorated panel or the string S including the deteriorated panel based on not a change amount but a measured value.

The recovery-predicted-value calculating unit 223 calculates a recovery predicted value that is an output value of the PV panel circuit expected as being recovered when the deteriorated panel is replaced. The recovery-predicted-value calculating unit 223 of this embodiment calculates a recovery predicted value of an output value of the string S.

The display control unit 231 causes the output unit 500 to be discussed later to display the measured value, the deteriorated panel, the recovery predicted value, and the process results by respective units.

The memory unit 300 includes a measured-value storing unit 311, an adjusted-value storing unit 312, and a setting storing unit 313, etc. The measured-value storing unit 311 stores measured values of a PV panel voltage, a string current, a PV panel output, a string voltage, and a string output, etc.

An example measured value utilized is information received by the measured-value receiving unit 210, information calculated by the calculating unit 211, or information input from the input unit 400 to be discussed later. The memory area for each piece of information can be regarded as a memory unit for each piece of information.

The adjusted-value storing unit 312 stores an adjusted value that will be a reference to the impedance change instruction by the change instructing unit 220. In this embodiment, for example, a change value of the operating current of the PV panel 1 or that of the operating voltage, etc., is included in such an adjusted value.

The setting storing unit 313 stores information on various settings necessary for the process by the diagnosis process unit 200, such as arithmetic expressions, parameters, and a threshold for a determination. Such information includes a voltage, a current, and an output power value for a deterioration determination, a voltage, a current and an output power value in the normal condition, an MPP operating point, and the specification of the product, etc. Those pieces of information are input by a user through the input unit 400. Alternatively, those pieces of information can be input through the controller 4 or the PCS 12.

The memory unit 300 can be all memory media available currently or in future, such as a memory device, a hard disk, and an optical disk. A configuration can be employed in which a recording medium having stored therein information is loaded in a reader to make the stored contents available to various processes.

Moreover, the memory unit 300 also includes a register, a memory, etc., utilized as a temporal memory area. Hence, a memory area temporally storing information for the process by each of the above-explained units can be regarded as the memory unit 300. A queue, a stack, etc., can be realized through the memory unit 300.

The input unit 400 is to input information necessary for the process by the diagnosis process unit 200, a selection of the process, and an instruction. An example input unit 400 is a keyboard, a mouse, a touch panel (including one formed on a display device), or a switch. Moreover, the input unit 400 includes one configured as a terminal for an operation, and one configured on an operation board. However, the input unit 400 includes all input devices available currently or in future.

The output unit 500 outputs various process results, etc., by the diagnosis unit 200 in a recognizable manner for an operator. An example output unit 500 is a display device, a printer, a meter, a lamp, a speaker, or a buzzer. Moreover, the output unit 500 includes one configured as a terminal for display, and one configured on an operation board. However, the output unit 500 includes all output devices available currently or in future.

All of or some of the diagnosis device 100 of this embodiment and other embodiments to be discussed later can be realized by controlling a computer through a predetermined program. In this case, the program physically utilizes the hardware resources of the computer to realize the above-explained respective units.

The method of executing the process of each of the above-explained units, the program, and the recording medium having stored therein the program are also embodiments of the present invention.

Moreover, how to set a range processed by the hardware resources and a range processed by software including the above-explained program is not limited to any particular configuration. For example, any one of the above-explained units may be configured as a circuit that realizes the process by such a unit.

The server device 21 may have any one function of the adjusting unit 111, the diagnosis process unit 200, the memory unit 300, the input unit 400, and the output unit 500.

### [2. Operation]

### [Method of Specifying Deteriorated Panel]

First, an explanation will be given of a method of actively changing the impedance of the PV panel circuit and of measure a voltage and a current to easily find a potentially deteriorated panel according to this embodiment.

First, an example case will be considered in which the string S includes 18 PV panels 1 connected in series. It is presumed that two kinds of deteriorated panels D1 and D2 having different deterioration patterns are present in the 18 PV panels 1 of the string S, respective numbers of the deteriorated panels D1 and D2 are two, and thus the total number of the deteriorated panels is four.

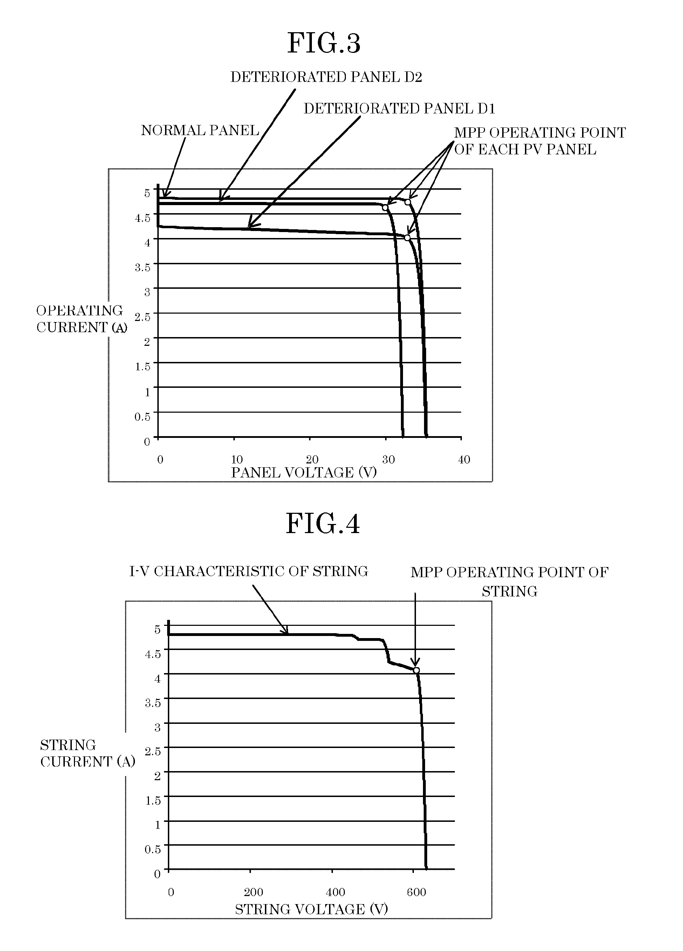

In this case, the I-V characteristic of the normal panel and those of the deteriorated panels D1 and D2 are shown in FIG. 3. FIG. 3 also shows the MPP operating point of each PV panel 1. Respective output reductions of the deteriorated panels D1 and D2 at the MPP operating point are 84 % and 89 % with respect to the normal panel.

Moreover, FIG. 4 shows the I-V characteristic of the string S including the above-explained normal panel, and deteriorated panels D1 and D2. The MPP operating point of the string S is also shown in the figure. The MPP operating point of this string S is shifted from the MPP operating point of each PV panel.

What is particularly notable is as follows. First, it is presumed that a total value of the outputs by all PV panels 1 exactly on the basis of the specification of each PV panel 1 in a string S, i.e., a value when a string S is configured by PV panels 1 all of which are operable normally is 100 % as a reference value.

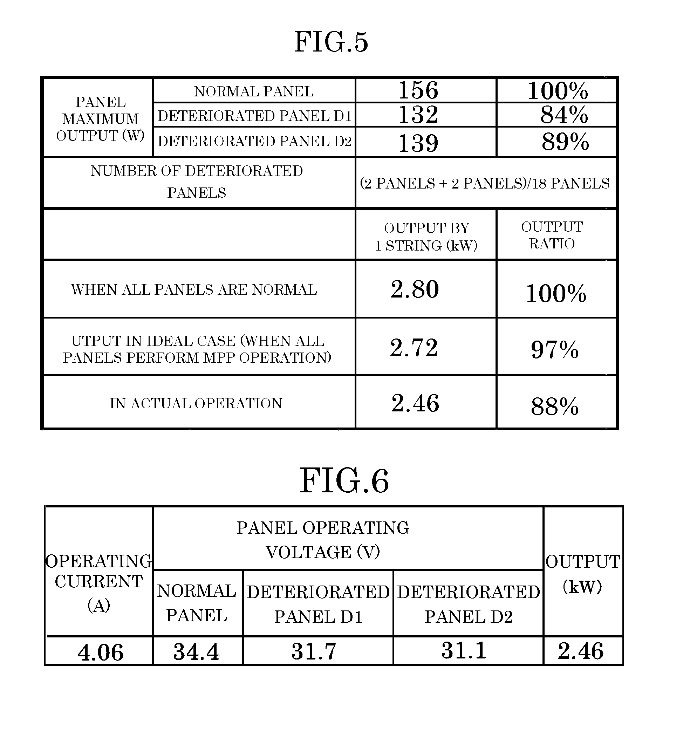

It is also presumed that there are four deteriorated panels D1 and D2 shown in FIG. 3 in 18 PV panels in a string S. In this case, if all PV panels 1 in this string S operate at respective MPP operating points, the output by this string S is to be 97 % with respect to the reference value. In practice, however, as shown in FIG. 5, the output by the string S decreases to 88 %.

Next, FIG. 6 shows a measured result of the operating voltage of each PV panel in the MPPT operation. It becomes clear from this measured result that both deteriorated panels D1 and D2 have respective outputs that are equal to or greater than 90 % of the normal panel. Hence, it can be determined that respective deterioration levels of the deteriorated panels D1 and D2 are not so large.

Moreover, when the deteriorated panel D1 is compared with the deteriorated panel D2, it can be determined that respective deterioration levels are substantially same. When numeric values are strictly compared, the deteriorated panel D2 has a larger output reduction than that of the deteriorated panel D1.

When the input impedance of the PCS 12 is changed by the impedance adjusting circuit 12b, the operating point of the string S also changes. Together with such a change, the operating point of each PV panel 1 also changes.

When, for example, the input impedance of the PCS 12 is reduced so as to increase the operating current, the operating voltage of the normal panel hardly changes. However, some deteriorated panels have the operating voltage sharply reduced.

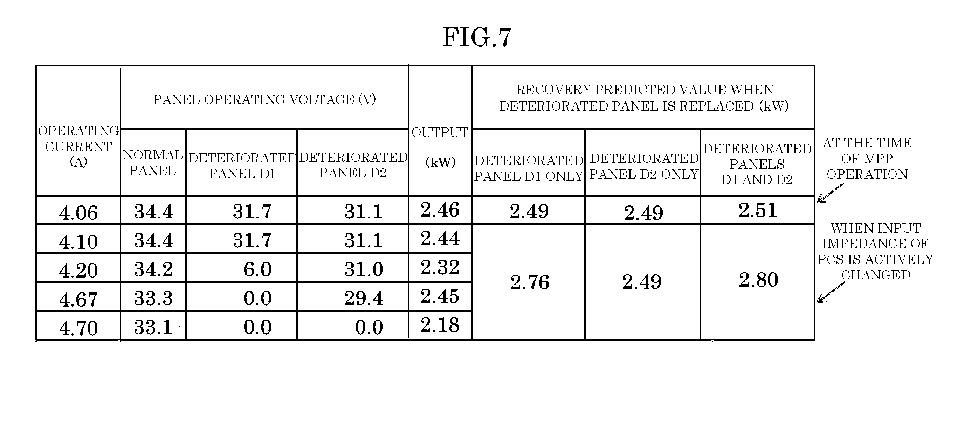

FIG. 7 shows how such a change occurs. According to FIG. 7, when the current at the MPPT operation increases by merely substantially 3.5 % from 4.06 A to 4.20 A, the operating voltage of the deteriorated panel D1 largely decreases.

Conversely, even if the current likewise increases, the voltage of the normal panel and that of the deteriorated panel D2 hardly change. Hence, it becomes clear that the output by the normal panel and that of the deteriorated panel D2 increase together with the current. That is, it becomes clear that the deteriorated panel D1 affects the output of the normal panel and that of the deteriorated panel D2 and such outputs are reduced.

As explained above, it becomes clear that the deteriorated panel D1 changes the output of the whole string S. Such a deteriorated panel D1 is referred to as a potentially deteriorated panel.

### [Necessity Determination Method for Replacement of Deteriorated Panel]

Next, an explanation will be given of a method of determining whether or not to replace the deteriorated panel when the above-explained deteriorated panel is present. First, when the input impedance of the PCS 12 is being changed, the I-V characteristic curve passes through each MPP point of each PV panel. Hence, when the output by each PV panel at this time is recorded and is subjected to arithmetic processing, an output recovery value when the deteriorated panel is replaced is predictable.

That is, based on a presumption that respective operating currents of the deteriorated panels D1 and D2 shown in FIG. 7 are changed to that of the normal panel, an output by the string S is calculated. Accordingly, respective output recovery values when only the deteriorated panel D1 is replaced, when only the deteriorated panel D2 is replaced, and when both deteriorated panels D1 and D2 are replaced can be obtained.

A "recovery predicted value (kW) when deteriorated panel is replaced" in FIG. 7 is a value obtained through such a method. In FIG. 7, a recovery predicted value (2.76 kW) when only the deteriorated panel D1 is replaced is quite similar to a predicted value (2.8 kW) when all deteriorated panels are replaced.

Conversely, a recovery predicted value (2.49 kW) when only the deteriorated panel D2 is replaced is substantially same as a current output (2.46 kW). Hence, it becomes clear that a sufficient recovery cannot be expected even if only the deteriorated panel D2 is replaced.

### [Diagnosis Process of Embodiment]

An explanation will now be given of a diagnosis process according to this embodiment based on the above-explained principle. In the following explanation, a deteriorated panel determined through a normal measuring process is referred to as a "deteriorated panel", a deteriorated panel specified through the diagnosis process of this embodiment is referred to as a "potentially deteriorated panel", and a deteriorated panel other than the "potentially deteriorated panel" in the "deteriorated panels" is referred to as a "normal deteriorated panel".

### [Normal Measuring Process]

First, an explanation will be given of a measuring process in a normal MPPT operation. That is, at the time of power generation by the PV panels 1, the PCS 12 executes an MPPT operation. A measured value received by the measured-value receiving unit 210 is stored in the measured-value storing unit 311. A measured value calculated by the calculating unit 211 is also stored in the measured-value storing unit 311.

Under such a condition, the measured-value comparing unit 212 compares the PV panel voltage and the string current with respective thresholds stored in the setting storing unit 313 in advance. The threshold may be generated through an arithmetic expression stored in advance in the setting storing unit 313 with reference to a normal panel voltage determined from measured values based on the principle of majority rule. The abnormality determining unit 213 determines the deteriorate PV panel 1 or the string S including the deteriorated panel 1 when the PV panel voltage and the string current decrease beyond the threshold.

However, as explained above, changes are quite small in some cases, and thus it is not always possible to specify a potentially deteriorated panel through this normal measuring process. Hence, according to this embodiment, the following diagnosis process is executed.

### [Diagnosis Process]

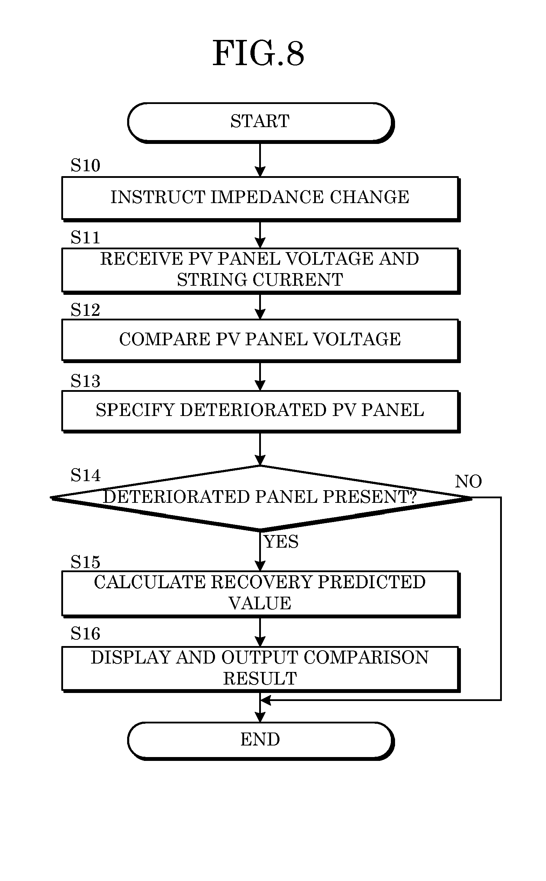

Next, an explanation will be given of the diagnosis process of this embodiment with reference to the flowchart of FIG. 8. This diagnosis process can be carried out when the power generation system is activated or can be carried out periodically. Moreover, the diagnosis process can be carried out when an abnormality is found as explained above.

First, the change instructing unit 220 instructs the adjusting unit 111 to change the impedance based on the adjusted value stored in the adjusted-value storing unit 312 (step S10). Accordingly, the adjusting unit 111 causes the impedance adjusting circuit 12b to change the input impedance of the PCS 12, and thus the current of the string S changes.

The measured-value receiving unit 210 receives the PV panel voltage and the string current in accordance with the change in the impedance from the controller 4 (step S11). The PV panel output can be calculated by the calculating unit 211. Those PV panel voltage and string current, etc., are stored in the measured-value storing unit 311 as measured values.

The change-amount determining unit 221 determines the change amount of the voltage of each PV panel 1 (step S12). Next, the specifying unit 222 specifies the PV panel 1 having the voltage decreased based on the threshold stored in the setting storing unit 313 in advance (step S13). The threshold may be generated through an arithmetic expression stored in the setting storing unit 313 in advance with reference to a normal panel voltage determined from measured values based on the principle of majority rule. Moreover, the specifying unit 222 may compare not the change amount but the measured value with the threshold, thereby specifying the PV panel 1 having the voltage decrease. Since voltage decrease in the case of deterioration is remarkable as explained above, this determination can be carried out through a simpler process in comparison with the determination through the abnormality determining unit 213.

When the specifying unit 222 specifies the PV panel 1 having the voltage remarkably decreased (step S 14: YES), such a PV panel 1 is the potentially deteriorated panel. When the specifying unit 222 specifies no PV panel 1 having the voltage remarkably decreased (step S14: NO), the diagnosis process is terminated.

Moreover, the recovery-predicted-value calculating unit 223 calculates a recovery predicted value of the string S based on the output of each PV panel stored in the measured-value storing unit 311 or the output of the normal PV panel stored in the setting storing unit 313 (step S15).

The recovery-predicted-value calculating unit 223 calculates respective recovery predicted values for a case in which the normal deteriorated panel is replaced, a case in which the potentially deteriorated panel is replaced, and a case in which all deteriorated panels including both kinds of deteriorated panels are replaced.

The display control unit 231 causes the output unit 500 to display the recovery predicted value and the actual output value in a compared manner (step S16). The display control unit 231 may cause the output unit 500 to display the measured value, the normal deteriorated panel, a change in voltage originating from the change in the impedance, and the potentially deteriorated panel, etc (see FIG. 7).

In this case, the normal deteriorated panel and the potentially deteriorated panel may be displayed in a distinguishable manner (e.g., highlightened display through a color, a size, a thickness, a font, a brightness, and flashing). A simple configuration may be employed in which, for example, the lamp corresponding to such a PV panel 1 on the operation board is turned on. It is possible to output sounds as such an indication from a speaker or a buzzer.

### [3. Advantageous Effect]

According to this embodiment, when the input impedance of the PCS 12 is actively changed to measure the voltage, the operating voltage of the deteriorated panel largely decreases. Hence, it becomes possible to easily specify a potentially deteriorated panel that is not easily specified through a measurement at the time of an MPPT operation only.

Moreover, the operating voltage of the potentially deteriorated panel largely decreases in comparison with the normal panel, and thus a measuring apparatus, a monitor, and a determination process, etc., need not to have a high precision, thereby reducing the costs.

Furthermore, a recovery value of the system when the deteriorated panel is replaced can be predicted. Hence, it becomes possible to come to know which panel should be replaced and how much the total output can be recovered by replacement of such a panel. Hence, a prospect for an appropriate replacement of a panel can be established.

### [B. Second Embodiment]

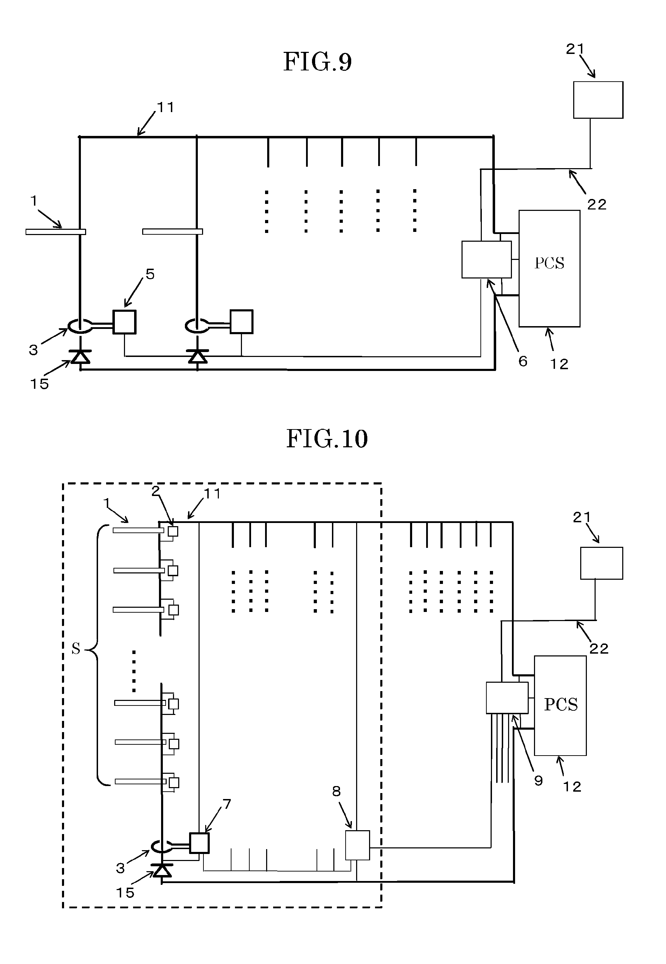

A second embodiment basically employs the same configuration as that of the first embodiment. However, as shown in FIG. 9, a power generation system subjected to a diagnosis in this embodiment has a plurality of PV panels 1 connected in parallel. Moreover, in this embodiment, a diode 15 is added for each PV panel 1. The diode 15 is a backflow preventing diode that prevents a current from flowing between the PV panels 1.

Furthermore, the controller 4 corresponding to each PV panel 1 is connected to a gateway 9 through a relay. The gateway 9 controls each slave controller 4, exchanges data with the slave device or the host device (e.g., the server device 21), and executes data communication with the PCS 12.

According to this embodiment, like the above-explained embodiment, by changing the input impedance of the PCS 12, the load impedance of the PV panel circuit having the plurality of PV panels 1 connected in parallel can be changed. In this case, when the "voltage of the PV panel D1" in the first embodiment is read as a "current of the PV panel D1", the potentially deteriorated panel can be specified. Accordingly, the same advantageous effects as those of the first embodiment can be accomplished.

### [C. Third Embodiment]

A third embodiment basically employs the same configuration as that of the first embodiment. However, as shown in FIG. 10, a power generation system subjected to a diagnosis in this embodiment has a plurality of strings S connected in parallel. Moreover, the diode 15 is added for each string S in this embodiment. A relay 8 and the gateway 9 are the same as those of the second embodiment.

According to this embodiment, like the above-explained embodiments, by changing the input impedance of the PCS 12, the same advantageous effects as those of the above-explained embodiments can be accomplished.

### [D. Fourth Embodiment]

### [Configuration]

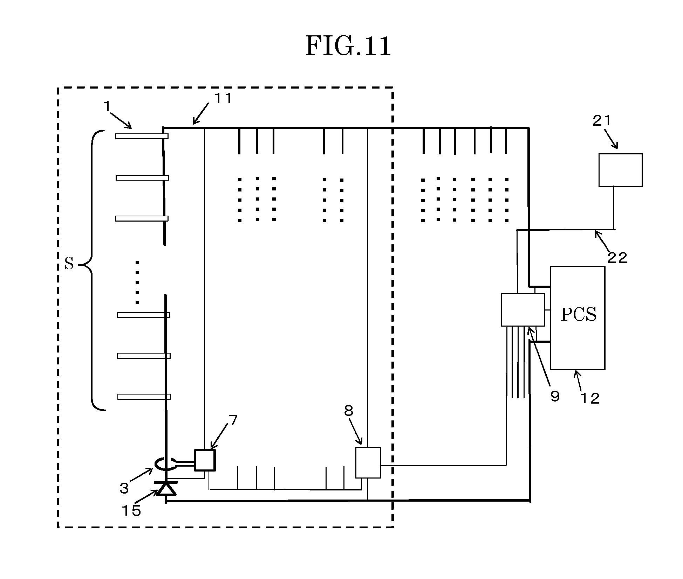

A fourth embodiment basically employs the same configuration as that of the first embodiment. However, as shown in FIG. 11, a power generation system subjected to a diagnosis in this embodiment has a plurality of strings S connected in parallel. The diode 15, the relay 8, and the gateway 9 are the same as those of the second embodiment.

Moreover, in this embodiment, no voltage monitor 2 for each PV panel 1 is provided, but the controller 4 measures the current of the corresponding string S and the whole voltage of the string S only. That is, according to this embodiment, the string current and the string voltage as those of the first embodiment are utilized as measured values.

### [Operation]

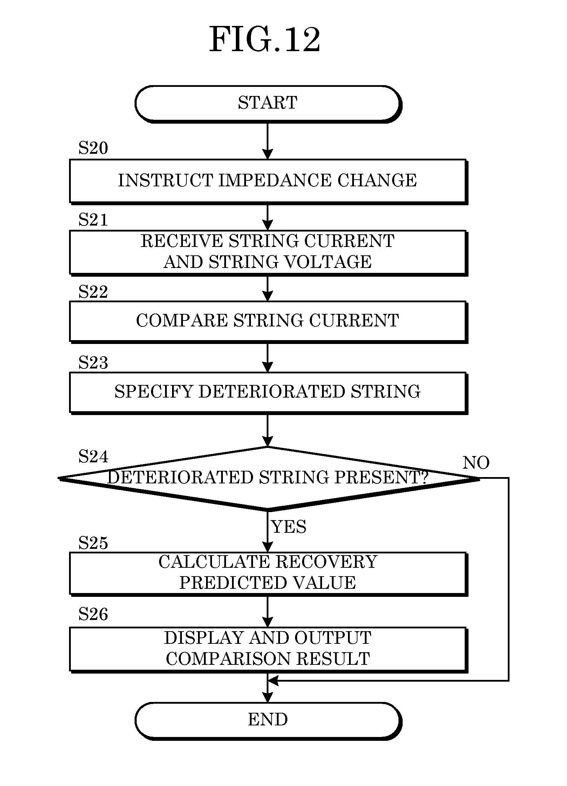

An explanation will now be given of a procedure of a diagnosis process in this embodiment with reference to the flowchart of FIG. 12. That is, the change instructing unit 220 instructs the adjusting unit 111 to change the impedance of the PV panel circuit based on the adjusted value stored in the adjusted-value storing unit 312 in advance (step S20). Accordingly, the impedance adjusting circuit 12b changes the input impedance of the PCS 12, and thus the current of the strings S changes.

The measured-value receiving unit 210 receives a string current and a string voltage in accordance with a change in the impedance from the controller 4 (step S21). A string output can be calculated by the calculating unit 211. Those string current and string voltage are stored in the measured-value storing unit 311 as measured values.

The change-amount determining unit 221 determines a change amount in the current of each string S (step S22). Next, the specifying unit 222 specifies the string S having the current decreased beyond the threshold stored in the setting storing unit 313 in advance (step S23). The threshold may be generated through an arithmetic expression stored in the setting storing unit 313 in advance based on a normal string current that is a reference value determined from measured values on the basis of the principle of majority rule. Moreover, the specifying unit 222 may compare not the change amount but the measured value with the threshold to specify the string S having the current decreased.

When the specifying unit 222 specifies the presence of the string S (a deteriorated string) having the current remarkably decreased (step S24: YES), such a string S is the string S that includes the potentially deteriorated panel. When the specifying unit 222 specifies no string S having the current remarkably decreased (step S24: NO), the diagnosis process is terminated.

Moreover, the recovery-predicted-value calculating unit 223 calculates a recovery predicted value of the string S based on the string output stored in the measured-value storing unit 311 or the normal string output stored in the setting storing unit 313 (step S25). That is, a recovery predicted value when the string S including the potentially deteriorated panel is replaced with a normal string S is calculated.

The display control unit 231 causes the output unit 500 to display the recovery predicted value and the actually measured output value in a compared manner (step S26). Accordingly, the user can determine whether or not to replace the string S. The display control unit 231 may cause the output unit 500 to display, for example, the measured value, the change in voltage due to the change in impedance, and the string S including the potentially deteriorated panel (see FIG. 7).

In this case, the string S including the potentially deteriorated panel may be displayed in distinguishable manner (e.g., highlightened display through a color, a size, a thickness, a font, a brightness, and flashing). A simple configuration may be employed in which, for example, the lamp corresponding to such a string S on the operation board is turned on. It is possible to output sounds as such an indication from a speaker or a buzzer.

### [Advantageous Effect]

According to this embodiment, it becomes possible to easily specify the string S which includes the potentially deteriorated panel that is not easily specified through a measurement at the time of an MPPT operation only. Moreover, it becomes possible to figure out which string S should be replaced and how much the total effect can be obtained by replacement of such a string S. Accordingly, a prospect for an appropriate replacement of the string S can be established.

Note that after the string S including the potentially deteriorated panel is specified, the above-explained voltage monitor 2 may be connected to each PV panel 1 configuring such a string S, and the deteriorated panel may be specified based on a measured value. It is also possible to specify the deteriorated panel through other techniques.

### [E. Fifth Embodiment]

### [1. Configuration]

### [Configuration of Power Generation System]

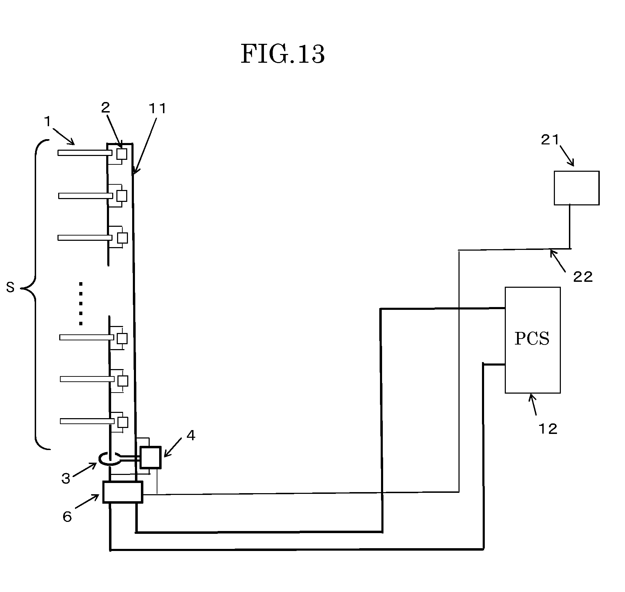

An explanation will now be given of a configuration of a power generation system to which a fifth embodiment is applied with reference to the schematic configuration diagram of FIG. 13. The same configuration as that of the first embodiment will be denoted by the same reference numeral, and the duplicated explanation thereof will be omitted. That is, a power generation system of this embodiment includes the strings S, the voltage meters 2, the current measuring terminal 3, the controller 4, the PCS 12, an impedance adjusting circuit 6, and the server device 21.

### [PCS]

The PCS 12 is a power control device connected to the power line 11. The PCS 12 includes an inverter and an MPP control unit. The inverter converts the DC of the PV panel 1 into AC. The MPP control unit executes the above-explained MPPT operation.

### [Impedance Adjusting Circuit]

The impedance adjusting circuit 6 is connected to the power line 11, and changes a current or a voltage to adjust the impedance of the strings S.

The impedance adjusting circuit 6 is also connected to the server device 21 through a network cable 22, and is configured to exchange information with the server device 21. The current value flowing through the series circuit of the strings S can be obtained from the above-explained PCS 12 and impedance adjusting circuit 6.

### [Configuration of Diagnosis Device]

An explanation will now be given of a configuration of a diagnosis device 100 of this embodiment. This diagnosis device 100 basically employs the same configuration as that of the first embodiment shown in FIG. 2, and the duplicated explanation for the same configuration will be omitted. That is, the diagnosis device 100 includes an impedance control unit 110, the diagnosis process unit 200, the memory unit 300, the input unit 400, and the output unit 500, etc. The impedance control unit 110 controls the impedance adjusting circuit 6. The impedance control unit 110 includes the adjusting unit 111 that causes the impedance adjusting circuit 6 to adjust the impedance.

The change instructing unit 220 instructs the impedance control unit 110 to change the load impedance of the PV panel circuit. The change instructing unit 220 of this embodiment gives an instruction of changing a current or a voltage of the strings S.

### [2. Operation]

### [Method of Specifying Deteriorated Panel]

The method of specifying a deteriorated panel is the same as the above-explained method with reference to FIGS. 3 to 7. In this embodiment, however, when a current for each string S is changed by the impedance adjusting circuit 6 connected to the strings S, the operating point of such a string S changes. Together with such a change, the operating point of each PV panel 1 also changes.

When, for example, a current flowing through the string S increases, the operating voltage of the normal panel hardly changes. However, respective operating points of some deteriorated panels sharply fall.

### [Necessity Determination Method for Replacement of Deteriorated Panel]

The necessity determination method for replacement of a deteriorated panel is also the same as the above-explained method with reference to FIG. 7. In this embodiment, however, when a current of the string S changes, the I-V characteristic curve of such a string S passes through the MPP operating point of each PV panel. Hence, the output by each PV panel at this time is recorded, and is subjected to arithmetic processing to predict an output recovery value when a deteriorated panel is replaced.

### [Diagnosis Process of Embodiment]

The diagnosis process of this embodiment based on the above-explained principle is the same as the above-explained process with reference to the flowchart of FIG. 8.

The change instructing unit 220 instructs the adjusting unit 111 to change the current of the string S based on the adjusted value stored in the adjusted-value storing unit 312 in advance (step S10). Hence, the adjusting unit 111 causes the impedance adjusting circuit 6 to change the current of the string S, and thus the impedance changes.

### [3. Advantageous Effect]

According to this embodiment, when the impedance of the strings S is actively changed to measure the voltage, the operating voltage of the deteriorated panel largely decreases. Hence, it becomes possible to easily find a potentially deteriorated panel that is not easily specified through a measurement at the time of an MPPT operation only. The other advantageous effects are the same as those of the first embodiment.

### [F. Sixth Embodiment]

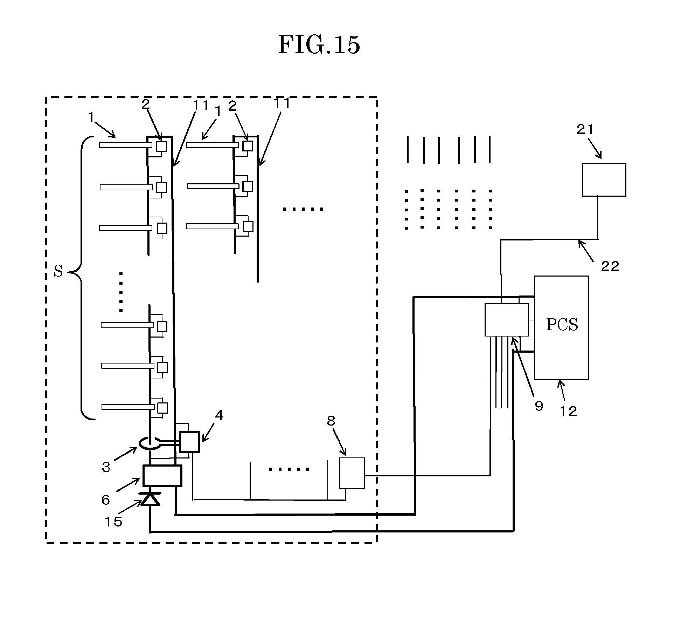

A sixth embodiment basically employs the same configuration as that of the above-explained fifth embodiment. However, as shown in FIG. 15, a power generation system subjected to a diagnosis in this embodiment has a plurality of strings S connected in parallel. The number of the strings S is not limited to any specific number. Moreover, the diode 15 is added for each string S in this embodiment. The diode 15 is a backflow preventing diode that prevents a current from flowing between the strings S.

The controller 4 provided for each string S is connected to the gateway 9 through the relay 8. The gateway 9 controls each slave controller 4, exchanges data with the slave device or the host device (e.g., the server device 21), and executes data communication with the PCS 12. The relay 8 intervenes between the controller 4 of each string S and the gateway 9.

According to this embodiment, like the above-explained embodiments, by changing the impedance of each string S, the same advantageous effects as those of the above-explained embodiments can be accomplished. Moreover, since the impedance adjusting circuit 6 (DC-DC converter) is added for each string S, the output reduction due to a voltage inconsistency of the strings S connected in parallel can be suppressed. Hence, the output reduction of the whole power generation system can be prevented.

### [G. Seventh Embodiment]

### [Configuration]

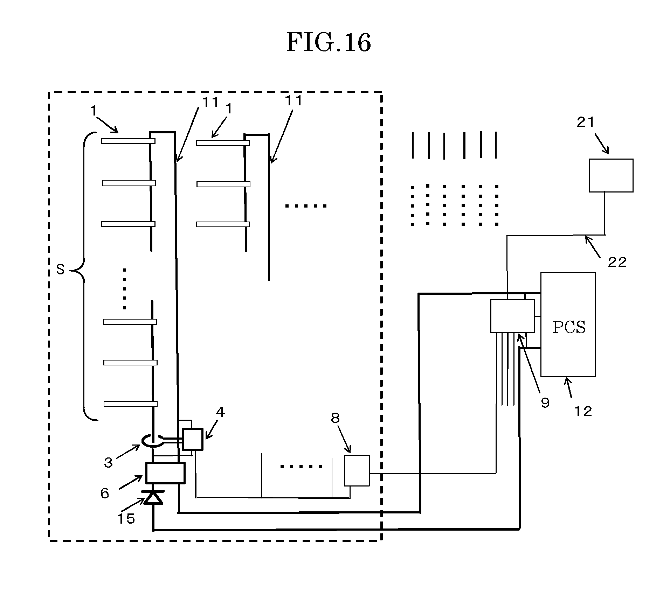

A seventh embodiment basically employs the same configuration as that of the above-explained sixth embodiment. However, as shown in FIG. 16, no voltage monitor 2 for each PV panel 1 is provided in this embodiment, but the controller 4 measures the current of the corresponding string S and the voltage of the whole string S only. That is, the string current and the string voltage as those of the first embodiment are used as the measured values.

### [Operation]

The procedure of the diagnosis process in this embodiment is the same as the above-explained procedure with reference to the flowchart of FIG. 12 in the above-explained fourth embodiment. In this embodiment, however, the change instructing unit 220 instructs the impedance control unit 110 to change the current of each string S based on the adjusted value stored in the adjusted-value storing unit 312 in advance (step S20). Hence, the adjusting unit 111 of the impedance control unit 110 changes the current of each string S, and thus the impedance changes. The following process is the same as that of FIG. 12.

### [Advantageous Effect]

According to this embodiment, it becomes possible to easily specify the string S including a potentially deteriorated panel that is not easily specified through a measurement at the time of an MPPT operation only. Moreover, it becomes possible to figure out which string S should be replaced and how much the total effect can be obtained through a replacement of such a string S. Hence, a prospect for an appropriate replacement of a string S can be established.

Note that after the string S including the potentially deteriorated panel is specified, the above-explained voltage monitor 2 may be connected to each PV panel 1 configuring such a string S, and the deteriorated panel may be specified based on a measured value. It is also possible to specify the deteriorated panel through other techniques.

### [H. Eighth Embodiment]

### [Configuration]

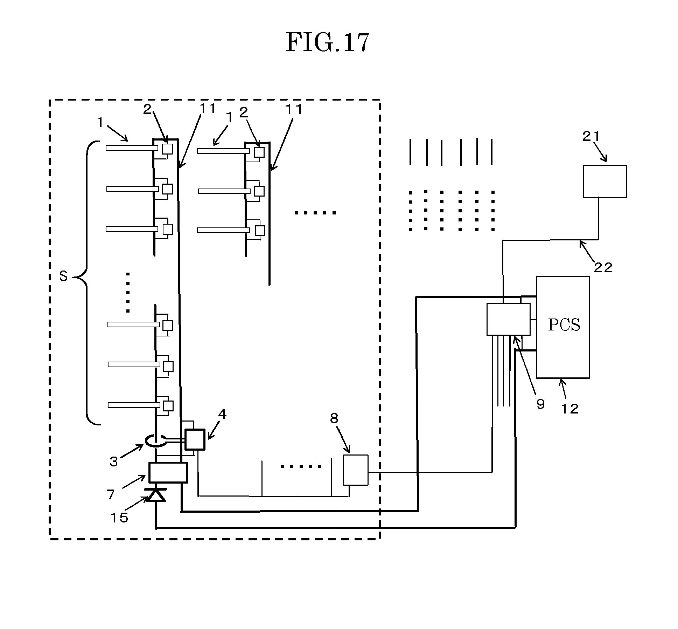

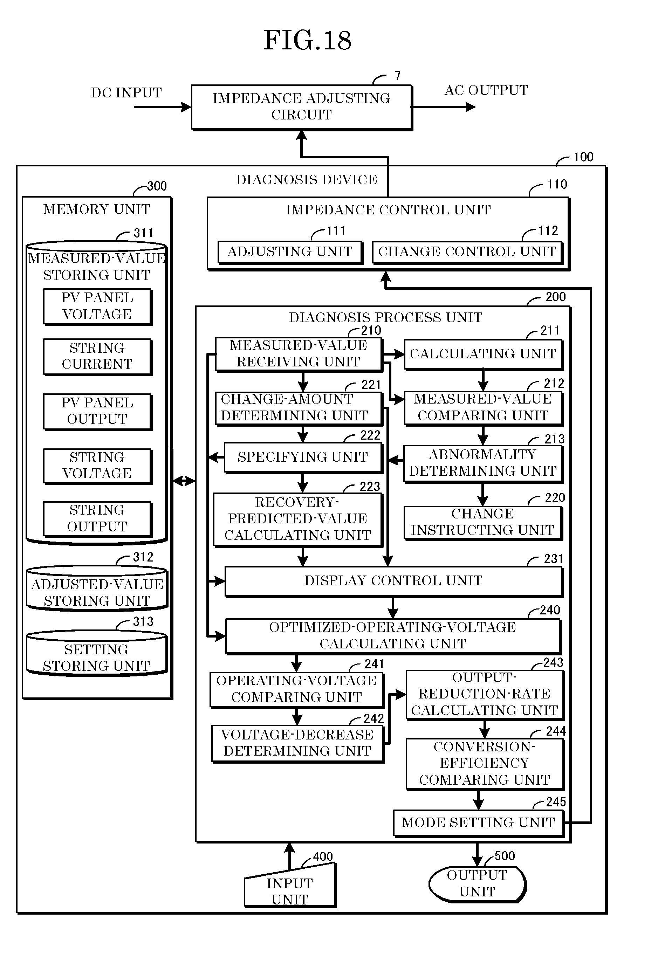

An eighth embodiment basically employs the same configuration as that of the sixth embodiment. However, as shown in FIGS. 17 and 18, an impedance adjusting circuit 7 is a DC-DC converter in this embodiment.

The DC-DC converter converts the DC voltage at a predetermined conversion efficiency. The DC-DC converter includes a through circuit that directly outputs the input thereof in a bypassed manner without activating the converter.

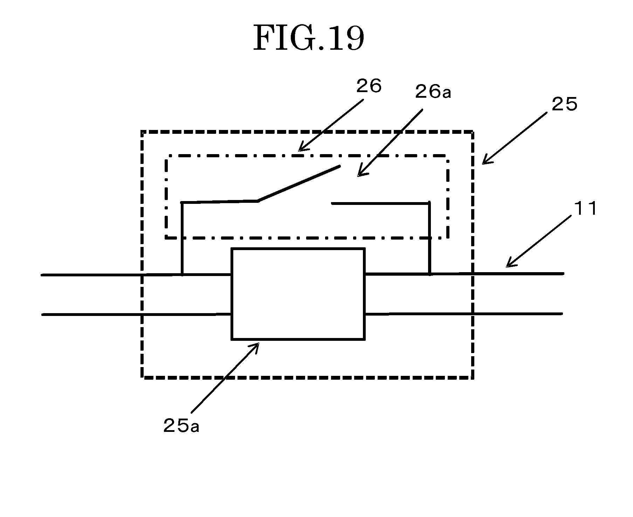

For example, as shown in FIG. 19, a DC-DC converter 25 includes a converter circuit 25a and a through circuit 26. The through circuit 26 includes a switch 26a, such as a relay circuit or a semiconductor switch that causes an input and an output to be directly short-circuited. An operation mode through the converter circuit 25a is referred to as a converter-operated mode, and an operation mode through the through circuit 26 is referred to as a through mode. The impedance control unit 110 includes a change control unit 112 that instructs the change in such modes to change the switch 26a.

Moreover, as shown in FIG. 18, the diagnosis process unit 200 of this embodiment includes an optimized-operating-voltage calculating unit 240, an operating-voltage comparing unit 241, a voltage-decrease determining unit 242, an output-reduction-rate calculating unit 243, a conversion-efficiency comparing unit 244, and a mode setting unit 245, etc.

The optimized-operating-voltage calculating unit 240 calculates the optimized operating voltage of each string S based on the PV panel voltage and the string current at the time of an MPPT operation in the through mode.

The operating-voltage comparing unit 241 compares the optimized operating voltage of each string S and the actual operating voltage thereof. The voltage-decrease determining unit 242 determines whether or not each string S has a voltage decrease based on a comparison result between the optimized operating voltage and the actual operating voltage. The output-reduction-rate calculating unit 243 calculates a rate of the output reduction of each string S.

The conversion-efficiency comparing unit 244 compares the conversion efficiency of the DC-DC converter stored in the setting storing unit 313 in advance with the output reduction rate. The mode setting unit 245 sets the operation mode of the DC-DC converter in each string S based on the comparison result of the conversion efficiency with the output reduction rate.

### [Operation]

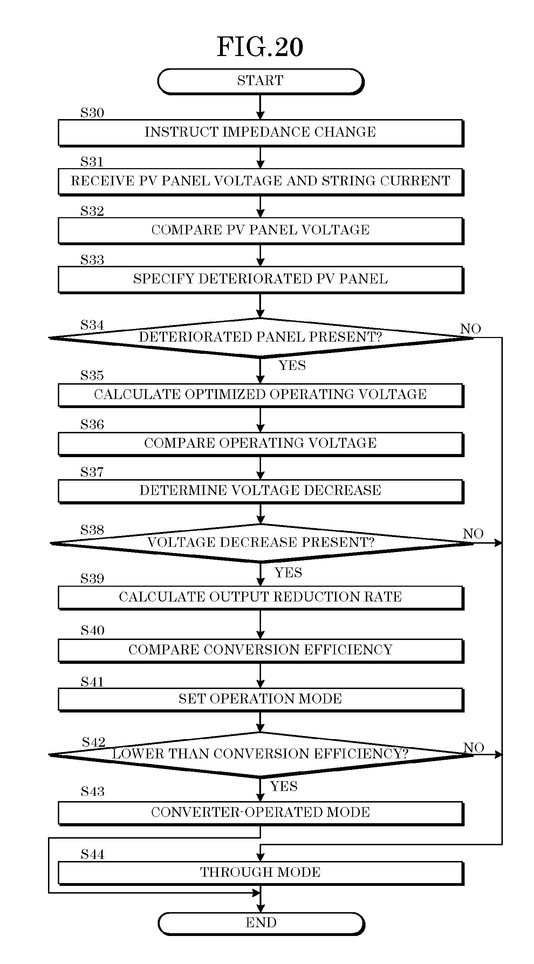

An explanation will now be given of an operation of this embodiment with reference to the flowchart of FIG. 20. The measuring process in the normal MPPT operation is same as those explained in the above embodiments. In the measuring process as a feature of this embodiment, each string S is operated in the through mode.

In the diagnosis process, the change instructing unit 220 instructs the adjusting unit 111 to change the impedance of each string S through the impedance adjusting circuit 7 (step S30). In this case, the change control unit 112 gives an instruction of a mode change to the converter-operated mode, and the DC-DC converter 25 starts changing the impedance. The following determination of a potentially deteriorated panel is same as those explained in the above embodiments (steps S31 to S34).

When the deteriorated panel is determined through the normal measuring process or when the potentially deteriorated panel is determined through the above-explained diagnosis process, the PV panel 1 may be replaced immediately. In this case, however, replacement of the PV panel 1 needs labor works and costs. Accordingly, the PV panel 1 is replaced in practice when the deterioration of the PV panel 1 advances as much as possible. Hence, there is a possibility that the operation of the power generation system is continued with the deteriorated panel being maintained as it is.

A basic operation when an operation in such a condition is continued will be explained with reference to the flowchart of FIG. 20 through the successive steps after step S35. That is, the optimized-operating-voltage calculating unit 240 obtains the optimized operating voltage of each string S based on the measured values obtained through the normal measuring process (step S35). In practice, an average of optimized operating voltages in each string S obtained from the PCS 12 in an MPPT operation is obtained. This is because the actual operating voltage is substantially equal to an average of the optimized operating voltages of the string S when the string S is operated in the through mode in the normal condition.

The operating-voltage comparing unit 241 compares the operating voltage actually measured in each string S with the optimized operating voltage (step S36). The voltage-decrease determining unit 242 determines whether or not there is a voltage decrease beyond a threshold set in the setting storing unit 313 (step S37).

When there is no voltage decrease (step S38: NO), the string S maintains the operation in the through mode (step S38). When there is a voltage decrease (step S38: YES), the output-reduction-rate calculating unit 243 calculates a rate of the output reduction of the string S (step S39).

The conversion-efficiency comparing unit 244 compares the output reduction rate with the conversion efficiency of the DC-DC converter (step S40). The mode setting unit 245 sets the operation mode based on the comparison result (step S41). That is, when the output reduction rate is lower than the conversion efficiency (step S42: YES), the mode setting unit 245 sets the operation mode to the converter-operated mode (step S43). When the output reduction rate is equal to or greater than the conversion efficiency (step S42: NO), the mode setting unit 245 sets the operation mode to the through mode (step S43).

The above-explained processes are executed for each string S, thereby setting the string S to be operated in the converter-operated mode eventually. In general, the strings S not including the deteriorated panel operate in the through mode, while only the string S including the deteriorated panel operates in the converter-operated mode.

### [Advantageous Effect]

According to the above-explained embodiment, the DC-DC converter 25 is added to each string S. This makes it possible to suppress an output reduction due to a voltage inconsistency of the optimized operating voltage with the string S including the deteriorated panel.

Moreover, the operation mode is set in accordance with the rate of the voltage decrease of the string S due to the deteriorated panel. Hence, only the necessary string S operates in the converter-operated mode. Accordingly, the output reduction due to the efficiency of the DC-DC converter 25 can be suppressed as much as possible.

That is, it becomes possible to avoid a case in which an output reduction due to the efficiency of the DC-DC converter 25 occurs when the string S is electrically conducted through the DC-DC converter 25, and the loss inversely becomes large when the rate of the deteriorated panels is small.

Furthermore, according to this embodiment, the voltage and the current at the input side are monitored and the impedance is adjusted using the DC-DC converter 25 to realize an MPPT operation at the input side. That is, the output side of the DC-DC converter 25 is not controlled.

Even though the output side is not controlled as explained above, the voltage of the whole system is optimized to the optimized operating voltage of the strings S in the through mode through an MPPT by an efficiency control unit built in the PCS 12 at the following stage. Hence, the voltage at the output side of the DC-DC converter 25 is adjusted to such a voltage. According to such a scheme, the DC-DC converter 25 can have a simplified circuit, and a device configuration that is inexpensive but highly efficient can be realized.

### [I. Ninth Embodiment]

### [1. Configuration]

### [Configuration of Power Generation System]

A power generation system of a ninth embodiment basically employs the same configuration as that of the sixth embodiment shown in FIG. 15. That is, the power generation system of this embodiment includes the strings S, voltage monitors 2, the current measuring terminals 3, the controllers 4, the relay 8, the gateway 9, the PCS 12, the impedance adjusting circuits 6, and the server device 21. According to this embodiment, however, the PCS 12 and each impedance adjusting circuit 6 employ following configurations.

### [PCS]

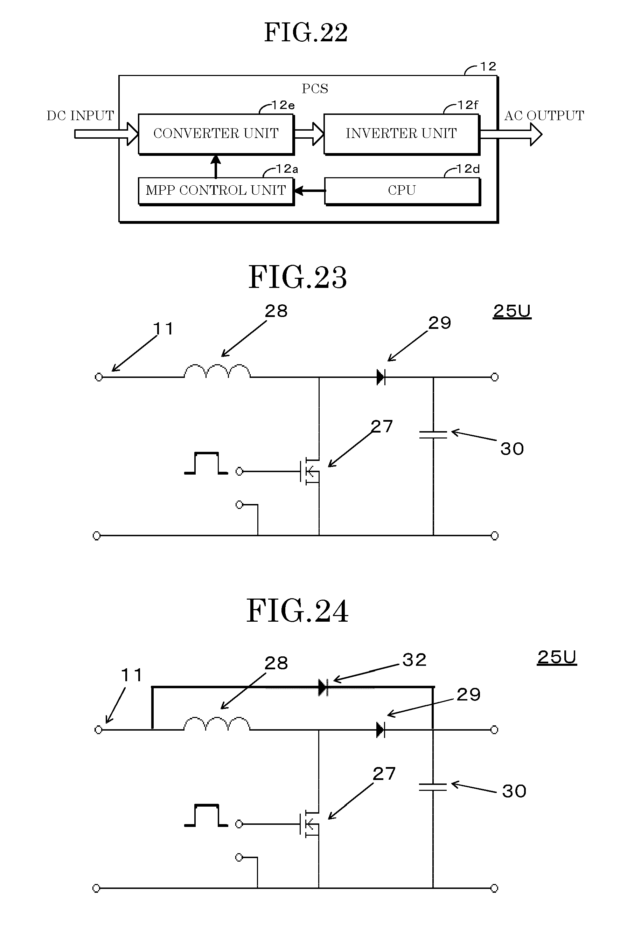

The PCS 12 is a power control device connected to the power line 11. As shown in FIG. 22, the PCS 12 includes an MPP control unit 12a, a converter unit 12e, an inverter unit 12f, and a CPU 12d.

The MPP control unit 12a executes the above-explained MPPT operation. The converter unit 12e is a circuit that converts an input DC at a predetermined boost/step-down ratio. More specifically, the converter circuit 12e is a DC-DC converter. The DC-DC converter also has a function of adjusting the input impedance of the PCS 12. Accordingly, the load impedance of the PV panel circuit including all strings S can be adjusted. The inverter unit 12f converts DC power into AC power and outputs such an AC power. More specifically, the inverter unit 12f is a DC-AC converter. The CPU 12d controls the whole PCS 12.

### [Impedance Adjusting Circuit]

Each impedance adjusting circuit 6 is connected to the power line 11 of each string S, and changes a current or a voltage, thereby adjusting the impedance of each string S. The impedance adjusting circuit 6 includes a converter operation unit 61, and a through operation unit 62. The converter operation unit 61 converts an input DC voltage at a predetermined boost/step-down ratio.

The through operation unit 62 lets the input DC voltage to pass through without boosting/stepping-down. The operation mode through the converter operation unit 61 is referred to as a converter-operated mode, while the operation through the through operation unit 62 is referred to as a through mode.

More specifically, like the configuration shown in FIG. 19, the impedance adjusting circuit 6 is configured as the DC-DC converter 25. The DC-DC converter 25 converts the DC voltage at a predetermined conversion efficiency. The DC-DC converter 25 includes the converter circuit 25a corresponding to the converter operation unit 61, and the through circuit 26 corresponding to the through operation unit 62.

The through circuit 26 directly outputs an input in a bypassed manner without a converter operation, and includes the switch 26a that causes an input and an output to be directly short-circuited, such as a relay circuit or a semiconductor switch.

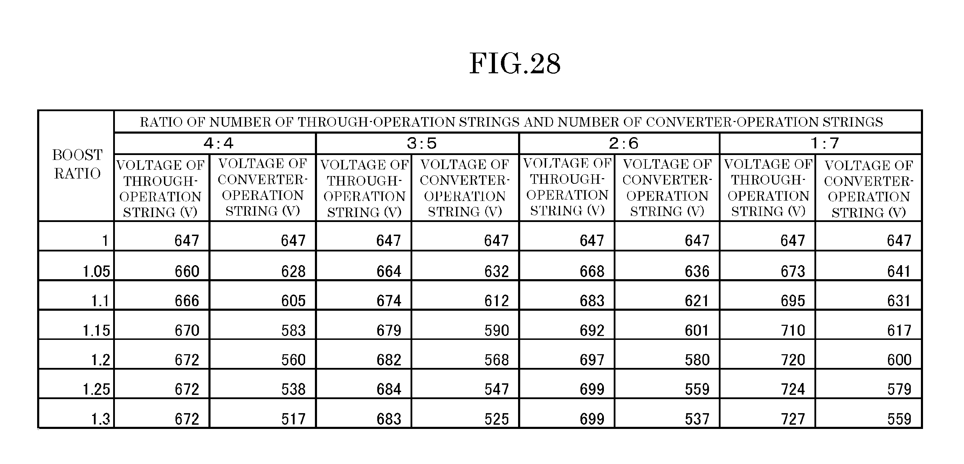

Various kinds of DC-DC converters are available. For example, as shown in FIG. 23, a typical booster DC-DC converter 25U can be used. In this case, when a semiconductor switch 27 for boosting is successively turned off, the input and the output are made short-circuited, thereby accomplishing the through mode. Note that reference numeral 28 is an inductance, reference numeral 29 is a diode, and reference numeral 30 is a capacitor in FIG. 28.

FIG. 24 shows the booster DC-DC converter 25U shown in FIG. 23 added with a diode 32 in parallel with a small voltage drop in the forward direction. In this case, the loss when the boosting semiconductor switch 27 is successively turned off is reduced in order to make the input and the output short-circuited.

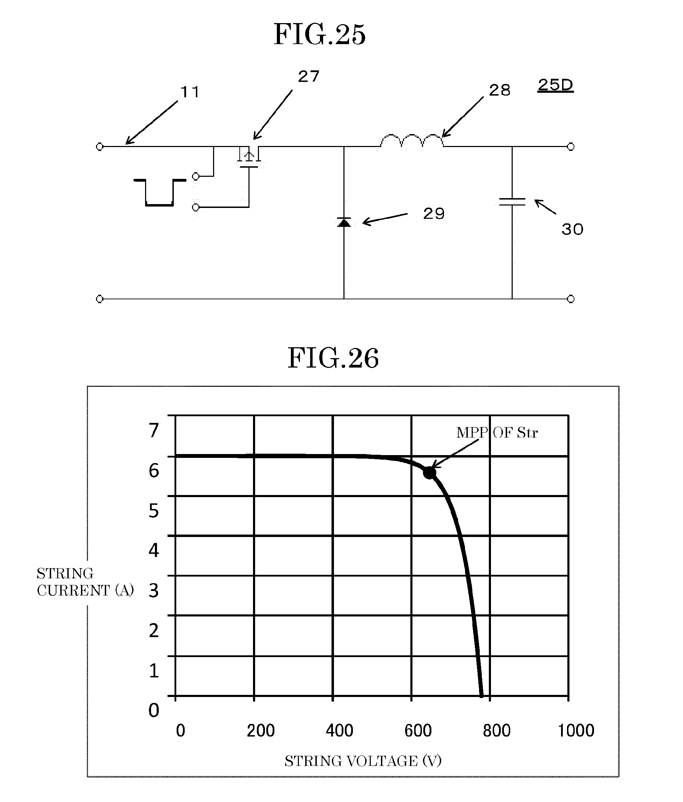

Moreover, as shown in FIG. 25, a typical step-down DC-DC converter 25D can be also used. In this case, when a step-down semiconductor switch 27 is successively turned on, the input and the output can be short-circuited.

### [Configuration of Diagnosis Device]

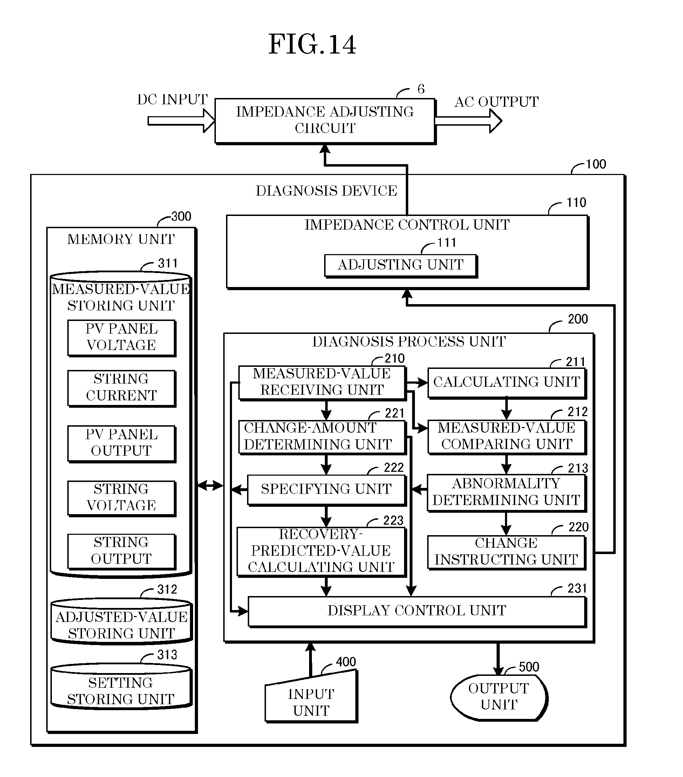

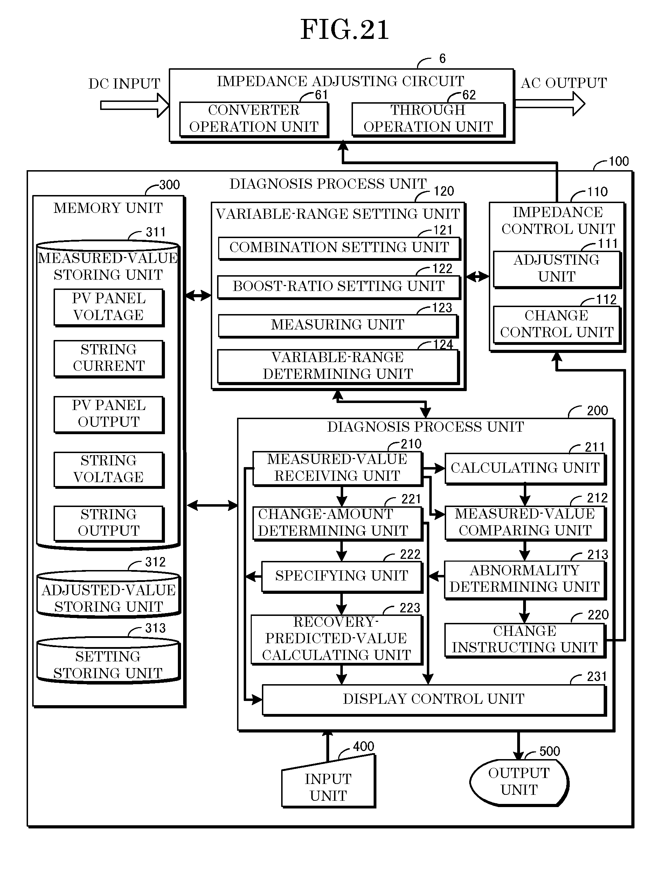

An explanation will now be given of a configuration of a PV panel diagnosis device (hereinafter, simply referred to as a diagnosis device) that diagnoses the above-explained power generation system with reference to FIG. 21. A diagnosis device 100 of this embodiment basically employs the same configuration as that of the fifth embodiment shown in FIG. 14, and includes the impedance control unit 110, the diagnosis process unit 200, the memory unit 300, the input unit 400, and the output unit 500. The diagnosis device 100 of this embodiment further includes a variable-range setting unit 120. The features of this embodiment will be explained below.

The impedance control unit 110 includes the adjusting unit 111 and the change control unit 112. The adjusting unit 111 causes the impedance adjusting circuit 6 to adjust the impedance based on the boost/step-down ratio of the voltage value set in advance.

The change control unit 112 selects an operation mode between the converter-operated mode including an impedance variable operation and the through mode. More specifically, this operation mode change is carried out through the switch 26a of the DC-DC converter 25.

The setting storing unit 313 stores information which is exemplified in the first embodiment and which also includes, for example, the ratios of the strings S subjected to the converter operation and the strings S subjected to the through operation, and the boost/step-down ratio of the voltage or the current. Such information is input by the user through the input unit 400. It is also possible to input such information through the controller 4 or the PCS 12.

The variable-range setting unit 120 sets a variable range of the voltage or the current when the adjusting unit 111 causes the impedance adjusting circuit 6 to adjust the impedance of each string S upon instruction from the change instructing unit 220.

The variable-range setting unit 120 includes a combination setting unit 121, a boost/step-down ratio setting unit 122, a measuring unit 123, and a variable-range determining unit 124. The combination setting unit 121 sets a combination of the string S subjected to the converter operation and the string S subjected to the through operation for the impedance adjusting circuit 6.

The setting of such a combination is made based on the ratio of the strings S subjected to the converter operation and the strings S subjected to the through operation. Such a ratio is stored in the setting storing unit 313 in advance.

The boost/step-down ratio setting unit 122 sets the boost/step-down ratio of the converter operation unit 61. Such a setting is made based on the boost/step-down ratio of the current or the voltage stored in the setting storing unit 313 in advance.

The measuring unit 123 measures respective operating points of the string S having undergone the through operation and the string S having undergone the converter operation. A measured value is received by the measured-value receiving unit 210, and is based on the measured value stored in the measured-value storing unit 311. The variable-range determining unit 124 determines a variable range based on the operating point measured by the measuring unit 123. The determined variable range is stored in the adjusted-value storing unit 312 or the setting storing unit 313 as information for setting the upper limit or the lower limit of the adjusted value.

The change instructing unit 220 of the diagnosis process unit 200 instructs the adjusting unit 111 of the impedance control unit 110 to cause the impedance adjusting circuit 6 to change the impedance based on the adjusted value having the upper limit or the lower limit set in accordance with the above-explained variable range.

### [2. Operation]

### [Method of Specifying Deteriorated Panel]

The method of specifying a deteriorated panel according to this embodiment is the same as those of the first and fifth embodiments. That is, the impedance adjusting circuit 6 connected to each string S actively changes the impedance of the PV panel circuit to measure the voltage or the current. This makes it possible to easily find a potentially deteriorated panel.

### [Necessity Determination Method for Replacement of Deteriorated Panel]

Moreover, the necessity determination method for replacement of a deteriorated panel by changing the current or the voltage of the string S is also the same as that of the fifth embodiment.

### [Setting Method of Variable Range]

An explanation will now be given of a method for setting the variable range of the voltage or the current when the impedance adjusting circuit 6 changes the impedance. The following explanation is given of the example case in which the booster DC-DC converter 25U shown in FIG. 23 is used to boost the voltage. When the semiconductor switch 27 is turned off, the DC-DC converter 25U operates in the through mode, and when the semiconductor switch 27 is caused to perform ON/OFF switching operation, the DC-DC converter 25U operates in the converter-operated mode. The operation mode change through the semiconductor switch 27 is instructed by the change control unit 112. However, by boosting/stepping-down the current at a preset boost/step-down ratio, even if the impedance is changed, the variable range of the voltage or the current can be obtained likewise the following explanation.

The following explanation will be also given of an example case in which the number of the strings S connected to one PCS 12 is eight. It is fine if the number of the strings S is equal to or greater than two and the number of the strings S is not limited to eight as explained above.

It is presumed that each of the eight strings S has the I-V characteristic shown in FIG. 26 when each string is configured by normal panels. When, however, a string including a deteriorated panel, etc., is present and the string S having a different characteristic is included (see FIG. 4), the basic point of view and operation are same.

As explained above, in accordance with the preset ratio, the strings S subjected to the through operation and the strings S subjected to the converter operation are set among the eight strings S. It is presumed that two strings S among the eight strings S are subjected to the through operation, while the remaining six strings S are subjected to the converter operation.

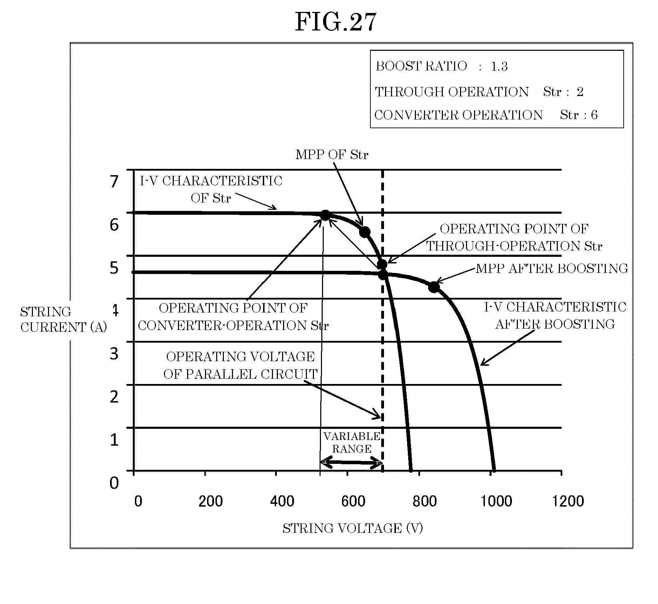

The booster DC-DC converter 25U performs a boosting control in accordance with the preset boost/step-down ratio (in the explanation for FIG. 27, set to be a boost ratio of 1.3). In order to simplify the explanation, the explanation will be given of a case in which the efficiency of the converter is 1. Moreover, respective boost ratios of the DC-DC converters 25 are set to be the same value.

In this case, as explained above, the PCS 12 performs an MPPT operation in such a way that the total output by the eight strings S becomes the maximum. Moreover, since the eight strings S are connected in parallel, the strings S operate in such a way that all voltages become consistent.

First, when the boost ratio is 1, the operation is same as that of a case in which all strings S perform the through operation. Hence, as is indicated by the I-V characteristic of Str in FIG. 27, each string S operates at each MPP. In this case, the boost ratio of the string S subjected to the converter operation is increased step by step. In this case, the I-V characteristic after the boosting when the boosting control is simply performed on the string S and the MPP after the boosting are as shown in FIG. 27.

When, however, the boost ratio is increased, the strings S performing the converter operation and the strings S performing the through operation are connected in parallel, and thus respective output voltages become consistent. Hence, the voltage at the PV-panel side of the string S performing the converter operation decreases, and the output sharply decreases.

Conversely, the PCS 12 operates in such a way that the total output by the eight strings S becomes the maximum. Accordingly, the string S performing the through operation (a through-operation Str) has the operating point further risen beyond the normal MPP. Accordingly, as is indicated by a dotted line in FIG. 27, the operating voltage of the PV panel circuit having the plurality of strings S connected in parallel is balanced at a position where the total output by the eight strings S becomes the maximum.

The output voltage by the string S (a converter-operation Str) performing the converter operation becomes also the intersection between the dotted line and the I-V characteristic after boosting in FIG. 27. This is, however, a condition resulting from the boosting. The voltage at the PV-panel side becomes a point (operating point of converter-operation Str) obtained by multiplying the operating voltage of the parallel circuit indicated by the dotted line in FIG. 27 by the inverse number of the boost ratio. The range between the voltage of this operating point and the voltage indicated by the dotted line in FIG. 27 becomes the variable range of the voltage when the boost ratio is increased to 1.3. When the boost ratio is further increased, the variable range further becomes wide. The current values corresponding to the upper limit of the variable range of the voltage and the lower limit thereof indicate the variable range of the current.

FIG. 28 shows a result of obtaining, through a calculation, voltages at the PV-panel side of the string S performing the through operation and the string S performing the converter operation. FIG. 28 shows how the voltage changes when the parameter of the boost ratio is changed. FIG. 28 also shows a difference due to the ratio of the number of the strings S subjected to the through operation and the number of the strings S subjected to the converter operation.

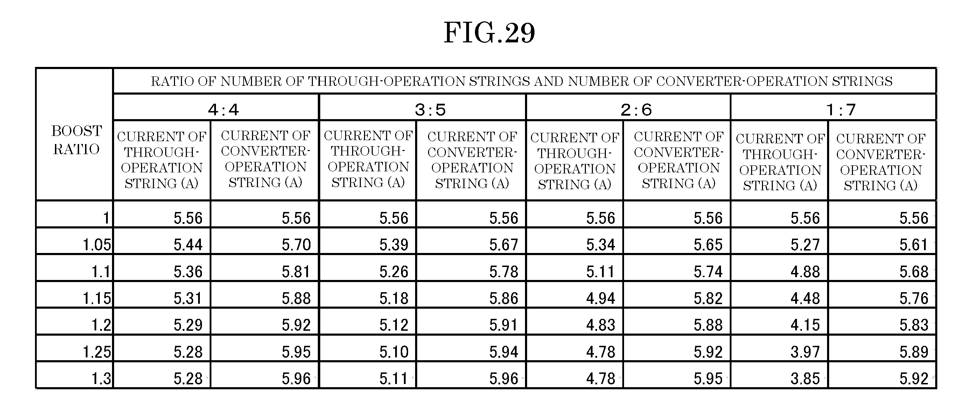

FIG. 29 shows a result of obtaining, through a calculation, currents at the PV-panel side of the string S performing the through operation and the string S performing the converter operation. FIG. 29 shows how the current changes when the parameter of the boost ratio is changed. FIG. 29 also shows a difference due to the ratio of the number of the strings S subjected to the through operation and the number of the strings S subjected to the converter operation.

Thereafter, the combination of the strings S subjected to the through operation and the strings S subjected to the converter operation is successively interchanged for a measurement. Accordingly, voltages of all strings S are measured at both of the higher range (at the time of the through operation) from the normal MPP and the lower range (at the time of the converter operation), and the variable range of the voltage and that of the current can be obtained. The interchange of the combination is carried out in such a way that each string S performs both through operation and converter operation at least once for each operation. Since measurement is carried out by causing all strings S to be operated, some strings S perform the through operation or the converter operation several times. In this case, it is fine if any of the obtained data of the variable range is utilized, and it is optional at which stage the obtained data is utilized. An average of plural pieces of data may be obtained and utilized as the variable range.

The above explanation was given of an example case in which the two strings S among the eight strings S are subjected to the through operation, while the remaining six strings S are subjected to the converter operation. However, as shown in FIGS. 28 and 29, when the ratio of such strings is changed, the variable range of the voltage and that of the current can be likewise obtained.

However, when the number of the strings S subjected to the through operation is increased, the variable range of the voltage at the lower voltage side (the string S subjected to the converter operation) than the MPP and that of the current become wider. Moreover, the variable range of the voltage at the higher voltage side (the string S subjected to the through operation) than the MPP and that of the current become narrower.

Conversely, when the number of the strings S subjected to the through operation is decreased, the variable range of the voltage at the lower voltage side (the string S subjected to the converter operation) than the MPP and that of the current become narrower. Moreover, the variable range of the voltage at the higher voltage side (the string S subjected to the through operation) than the MPP and that of the current become wider.

Accordingly, regarding the ratio of the number of the strings S subjected to the through operation and that of the strings S subjected to the converter operation, an appropriate value can be selected from the variable range of the voltage and that of the current desirable to measure. By changing this ratio as needed, it is possible to make the variable range of only a particular string S wider.

Moreover, in this embodiment, the boost ratios of respective converters are set to be the same value. When, however, the boost ratio is changed for each string S, the same advantageous effects can be accomplished. The higher the boost ratio of the string S is set, the lower the measurable voltage becomes.

In this case, no string S is caused to perform the through operation and all strings S can be caused to perform the converter operation. That is, the strings are operable in such a way that the operating voltage of the strings S having the boost ratio set to be low locates at the higher voltage side than the MPP and the operating voltage of the strings S having the boost ratio set to be high locates at the lower voltage side than the MPP.

Moreover, when a step-down converter is used instead of the booster converter, the same advantageous effects can be accomplished. In this case, the strings S performing the converter operation operate at the higher voltage side than the MPP and the strings S performing the through operation operate at the lower voltage side than the MPP, and the other features are the same as those of the above-explanation.

Moreover, when a booster/step-down converter is used instead of the booster converter, the same advantages can be accomplished. In this case, the operation of the booster/step-down converter is simply replaced with the operation of the booster converter or the step-down converter.

Furthermore, when the booster/step-down converter is used, it becomes possible to cause all strings S to operate in the converter-operated mode. In this case, however, it is necessary that a boost operation and a step-down operation are mixed. The string S performing the step-down operation operates at a higher voltage side of the MPP, and the string S performing the boost operation operates at a lower voltage side of the MPP, but the other operations are the same as the above-explained operations.

### [Diagnosis Process of Embodiment]

Next, an explanation will be given of a diagnosis process of this embodiment based on the above-explained principle.

### [Normal Measuring Process]

First, the measuring process in the normal MPPT operation is the same as that of the above-explained first embodiment.

### [Diagnosis Process]

Next, a diagnosis process of this embodiment will be explained. The diagnosis process of this embodiment is basically the same as that of the above-explained first embodiment. In this embodiment, however, a setting process of a variable range is further carried out.

### (Setting of Variable Range)

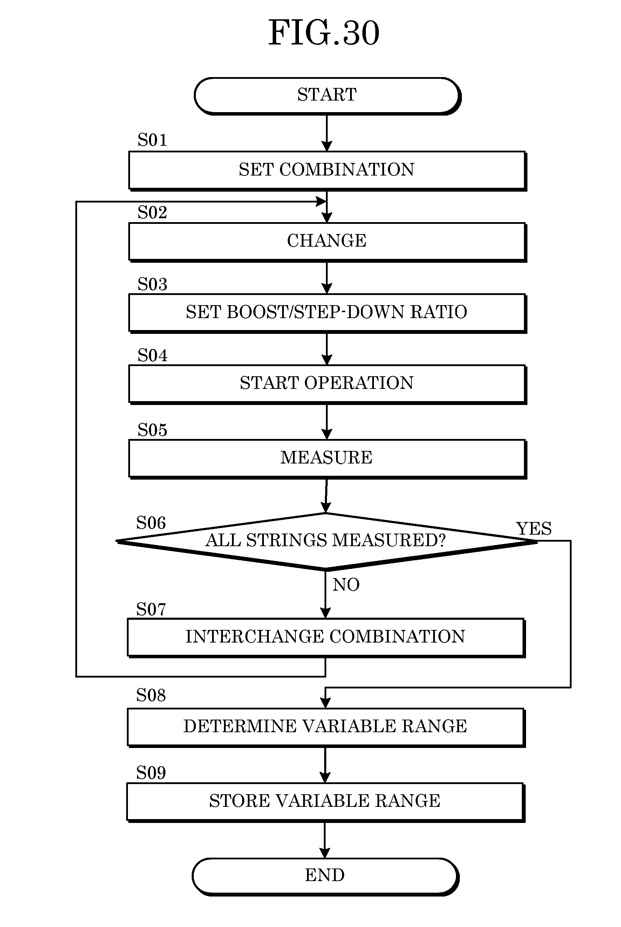

First, an explanation will be given of a setting process of a variable range executed by the variable-range setting unit 120 with reference to the flowchart of FIG. 30. The combination setting unit 121 sets the combination of the strings S subjected to the converter operation and the strings S subjected to the through operation (step S01). This setting is made in accordance with the ratio of the strings S subjected to the converter operation and the strings S subjected to the through operation stored in the setting storing unit 313 in advance.

The change control unit 112 of the impedance control unit 110 changes the mode of the impedance adjusting circuit 6 of each string S between the through mode or the converter-operated mode based on the combination set as explained above (step S02).

Moreover, the boost/step-down ratio setting unit 122 sets the boost/step-down ratio of the converter operation unit 61 based on the boost/step-down ratio stored in the setting storing unit 313 in advance (step S03). The adjusting unit 111 of the impedance control unit 110 starts activating the impedance adjusting circuit 6 in accordance with such a setting (step S04). Note that the PCS 12 performs the MPPT operation.

The measuring unit 123 measures the operating voltage or the operating current of the string S operated in the through mode and that of the string S operated in the converter-operated mode (step S05).

The combination setting unit 121 executes a setting of interchanging the combination of the strings S for a next combination of the strings S (step S06: NO) in accordance with the set ratio (step S07). Next, the change control unit 112 changes respective operation modes of the strings S in accordance with the setting (step S02). Thereafter, the above-explained processes are repeated (steps S03 to S05).

When the measuring unit 123 completes the measurement for all strings S (step S06: YES), the variable-range determining unit 124 determines the variable range of the voltage value or the current value of each string S through the above-explained method based on the measured value (step S08). The variable range is stored in the adjusted-value storing unit 312 or the setting storing unit 313 as information for setting the upper limit and the lower limit of the adjusted value for the adjusted-value storing unit 312 (step S09).

### (Determination on Potentially Deteriorated Panel)

A determination process on a potentially deteriorated panel is the same as those of the first and fifth embodiments explained with reference to the flowchart of FIG. 8. That is, the change instructing unit 220 instructs the adjusting unit 111 to change the current of the string S based on the adjusted value stored in the adjusted-value storing unit 312 in advance (step S10). Accordingly, the adjusting unit 111 causes the impedance adjusting circuit 6 to change the current of the string S, and thus the impedance is changed. It is presumed that the variable range of the adjusted value is set as explained above.

### [3. Advantageous Effects]

According to this embodiment, the same advantageous effects as those of the above-explained embodiments can be accomplished. Moreover, the variable range of the voltage or the current for the above-explained diagnosis can be obtained by causing the plurality of strings S to execute the MPPT operation at the combination of the different impedances. Hence, an efficient diagnosis process based on the appropriate adjusting range is enabled.

Furthermore, the impedance adjusting circuit 6 is added for each string S, and thus an output reduction due to the voltage inconsistency of the strings S connected in parallel can be suppressed by causing each string S to execute the MPPT operation. Hence, the output reduction of the whole power generation system can be suppressed.

### [J. Other Embodiments]

The embodiment of the present invention is not limited to the above-explained embodiments.
(1) In the above-explained embodiments, a configuration may be employed in which a determination for a replacement is carried out based on the recovery predicted value. For example, a predicted-value comparing unit and a replacement determining unit are further provided in the diagnosis process unit 200. The predicted-value comparing unit compares the recovery predicted value with a recovery value set in the setting storing unit in advance or the output by the string S based on the output by each PV panel 1 when the current of the string S is changed. The replacement determining unit determines whether or not a replacement of a PV panel is necessary based on the comparison result by the predicted-value comparing unit.

When a recovery predicted value if any deteriorated panel (indicating both normal deteriorated panel and a latent deteriorated panel) is replaced is equal to or larger than the present recovery value or exceeds such a recovery value, the replacement determining unit determines that a replacement of this deteriorated panel is necessary. When a recovery predicted value if any deteriorated panel is replaced is smaller than or equal to or smaller than the preset recovery value, the replacement determining unit determines that no replacement is necessary. The determination result is displayed on the output unit through the display control unit. This facilitates the user to determine the necessity of a replacement. The replacement of the PV panel may be advantageous only when a plurality of deteriorated panels is placed. Regarding the way of displaying the determination result, like the above-explained identification displaying of the deteriorated panel, various ways are applicable in accordance with the PV panel or the string S that needs a replacement.
(2) Various DC-DC converters can be utilized as the DC-DC converter of the above-explained embodiments as shown in FIGS. 23 to 25. In the above-explained embodiments, in order to suppress the output reduction as much as possible due to the efficiency of the DC-DC converter, the DC-DC converter is basically operated in the through mode. The diode 29 shown in FIG. 23 is for a fast-speed operation, and has a high forward voltage. Accordingly, if the diode 29 is used for the through mode as it is, the loss becomes large. FIG. 24 shows a configuration that solves this disadvantage. The loss can be reduced by connecting diodes having a low forward voltage in parallel.

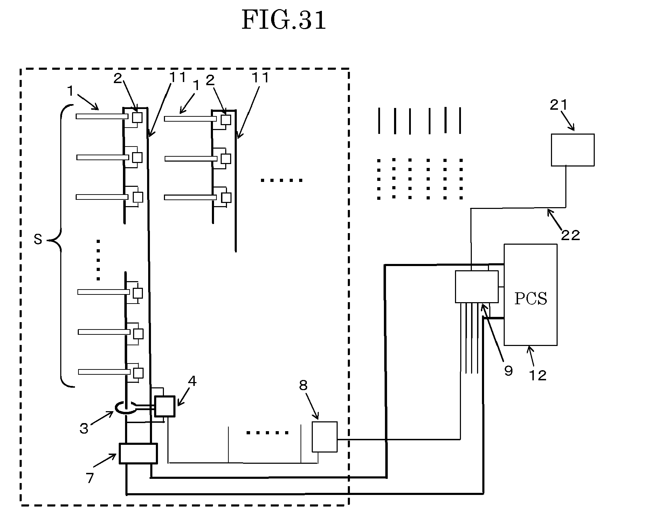

Moreover, FIG. 31 is a schematic configuration diagram showing a configuration shown in FIG. 15 and having the diode 15 eliminated. In the cases of the circuit configurations shown in, for example, FIGS. 23 and 24, the diode 29 is connected in the DC-DC converter 25. The diode 29 also operates in the through mode. Accordingly, when such a DC-DC converter 25 is used, the diode 15 can be eliminated.
(3) The impedance adjustment made by the adjusting unit and the impedance control unit may be carried out by changing the voltage not by changing the current. When the operating current remarkably decreases by changing the voltage, the specifying unit 222 can specify that such a string S includes the deteriorated panel.

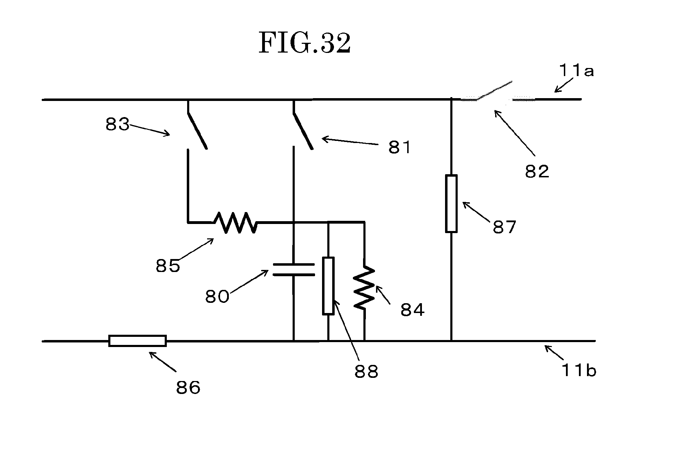

Various methods can be applied to change the voltage in addition to the above-explained method of utilizing the DC-DC converter. As an example, a circuit using a capacitor and a switch will now be explained with reference to FIG. 32. This circuit corresponds to the impedance adjusting circuit 6 shown in FIGS. 13, 15, and 16 or the impedance adjusting circuit 7 shown in FIGS. 13 and 31. This impedance adjusting circuit 6 or 7 employs a scheme of changing the current of the string S by changing the voltage thereof. Various settings are stored in, for example, the setting storing unit in advance.

A capacitor 80 and a switch 81 connected in series are connected to the string S in parallel. That is, the switch 81 and the capacitor 80 are connected between a high-voltage power line 11a and a low-voltage power line 11b. Moreover, a discharging resistor 84 and a voltage measuring element 88 are both connected in parallel with the capacitor 80 between the switch 81 and the power line 11b.

A switch 83 and a charging resistor 85 connected in series together are connected in parallel with the switch 81 between the capacitor 80 and the power line 11a. A portion including such a capacitor 80, a switch 81, a discharging resistor 84, a voltage measuring element 88, a switch 83, and a charging resistor 85 is an impedance variable operation unit 61. The impedance variable operation unit 61 can be named as a capacitor charging unit since it uses the capacitor 80 for charging to be discussed later.

A switch 82 is connected in series with the high-voltage power line 11a. A portion including this switch 82 corresponds to the through operation unit 62. Moreover, a current measuring element 86 is connected in series with the low-voltage power line 11b.

The current measuring element 86 is not limited to any particular element, such as a resistor or a CT, as long as it can measure a current. The current measuring terminal 3 can be used as the current measuring element 86. Moreover, voltage measuring element 87 is connected between the power line 11a and the power line 11b. The voltage measuring elements 87 and 88 are not limited to any particular elements as long as those can measure a voltage.

The switches 81, 82, and 83, the current measuring element 86, and the voltage measuring elements 87 and 88 are connected to the impedance control unit 110, and are configured to exchange a signal indicating a measured value or a signal for an opening/closing instruction, etc., with the impedance control unit 110.

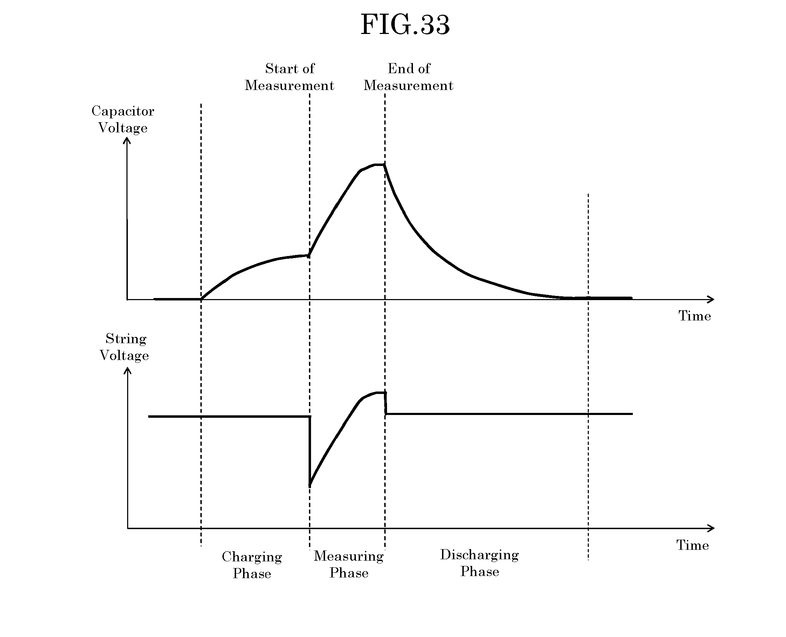

The operation of such an impedance adjusting circuit 6 or 7 will now be explained in more detail. FIG. 33 shows how the voltage of the capacitor 80 and that of the string S change before and after a measurement. In FIG. 33, in order to make a waveform to be easily understandable, the time span in the horizontal axis is enlarged.

First, the impedance adjusting circuit 6 or 7 of the string S subjected to the through operation maintains a normal operation condition in which the switches 81 and 83 are opened and the switch 82 is closed.

Conversely, in the case of an impedance variable operation, first, the impedance adjusting circuit 6 or 7 of the string S turns off the switch 83. This causes the capacitor 80 to start charging (charging phase in FIG. 33). When the charging voltage of the capacitor 80 measured by the voltage measuring element 88 becomes a preset value, the adjusting unit 111 instructs the change control unit 112 to change the operation mode to the impedance variable operation.

The charging resistor 85 is set in such a way that a charging current at this time becomes an extremely small value that is equal to or lower than 1 % in comparison with the string current. Hence, the current taken out to the exterior is substantially same as that of the through operation. As a result, the power becomes substantially same as that of the through operation. The charging time constant CR at this time is set to be several seconds to several minutes.

As explained above, when the voltage of the capacitor 80 reaches the set value (e.g., 1/2 of the MPPT voltage), the change control unit 112 controls the change in the on/off operation of the switches 81 to 83 of the impedance adjusting circuit 6 or 7.

That is, after the switch 81 turns off, the switch 82 turns on. This is because a large current is flowing through the power line 11a, the switch 81 is turned on at first to let the current to flow in the capacitor 80, thereby preventing the switch 82 from breaking down at the time of turning on. The switch 83 also turns on, but it may occur either before or after the switch 81 turns off.

Upon turning off of the switch 81, the voltage of the string S becomes the same voltage as the voltage across both terminals of the capacitor 80, a current from the PV panel 1 flows in the capacitor 80, the capacitor 80 is charged, and the voltage of the capacitor 80 rises (measuring phase in FIG. 33).

After the switch 81 turns off, upon turning on of the switch 82, the output by the string S to the PCS 12 is cut for a moment, and the string voltage becomes equal to or larger than the MPPT voltage. The string voltage can be changed through this operation, and the string current also changes together with the change in the voltage. Hence, the load impedance of the string changes.

The controller 4 measures the current and voltage of the string S using the current measuring element 86 (or the current measuring terminal 3) and the voltage measuring element 87 when the load impedance of the string is being changed in this fashion. Moreover, the voltage monitor 2 connected to each PV panel 1 measures the voltage thereof.

After the measurement, the switch 82 is immediately turned off and the switch 81 is turned on to return to the normal operation. When the switch 82 is turned off and the switch 81 is turned on, the capacitor 80 starts discharging through the discharging resistor 84, and thus the voltage of the capacitor 80 slowly falls (discharging phase in FIG. 33).

Since the measurement time ends within a hundred milli-seconds, the measurement does not affect the PCS 12, etc. Moreover, when the measurement is carried out for each string S by shifting a time, the measurement does not affect the whole output.

When the same measurement is repeated, the charging level of the capacitor 80 can be maintained without completely discharging, and a time for the capacitor 80 that charges again from zero voltage can be eliminated. That is, during the discharging of the capacitor 80, the adjusting unit 111 determines that the voltage measured through the voltage measuring element 88 falls to a predetermined voltage.

At this time, the change control unit 112 performs a control in such a manner as to turn off the switch 81, and to turn on the switch 82, thereby enabling a measurement similar to the above-explained one. The predetermined voltage mentioned in this explanation may be the same voltage as that of the set voltage in the case of a charging in advance or may be other values. Moreover, the switch 81 may be turned off and the switch 82 may be turned on when a time until a desired charging voltage is obtained from the start of discharging has elapsed based on the discharging time defined by the charging time constant CR.

According to the above-explained configuration, the impedance can be changed through the charging/discharging of the capacitor 80, and thus the impedance adjusting circuit 6 or 7 can be simply configured. Moreover, when the switch 83 is turned off and the capacitor 80 is charged to a minimum voltage within a range where a measurement is desired in advance prior to the measurement, it becomes possible to set the minimum voltage within the measurement range. Hence, a time necessary for the measurement can be reduced. The minimum voltage within the measurement range can be set to zero. In this case, the switch 83 and the charging resistor 85 can be omitted.

By discontinuing the discharging of the capacitor 80 to maintain the charged condition thereof, a time necessary for a charging can be reduced when the same measurement is repeated.

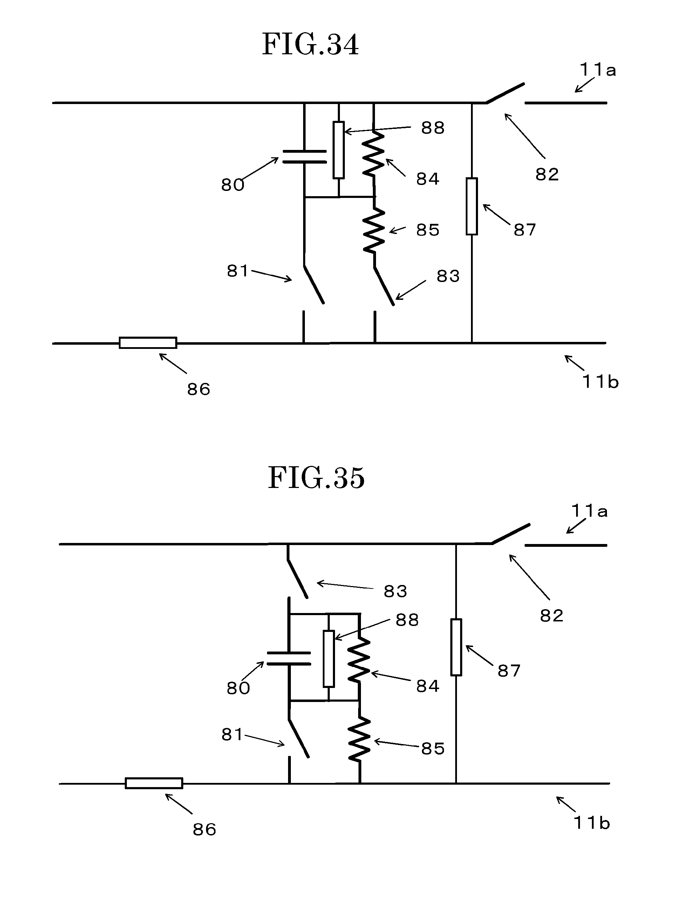

The impedance adjusting circuit 6 or 7 can employ circuit configurations shown in, for example, FIGS. 34 and 35. FIG. 34 shows an example having the switches 81 and 83 connected to the low-voltage power line 11b inversely with the configuration shown in FIG. 32. FIG. 35 shows an example having the switch 81 connected to the low-voltage power line 11b.

When the switch is connected to the high-voltage side, it is necessary to prepare an insulation amplifier, etc., and to cause such a switch to perform a switching operation with the switch being insulated. However, by connecting at least the switch 81 to the low-voltage side, such an insulation configuration can be partially omitted.

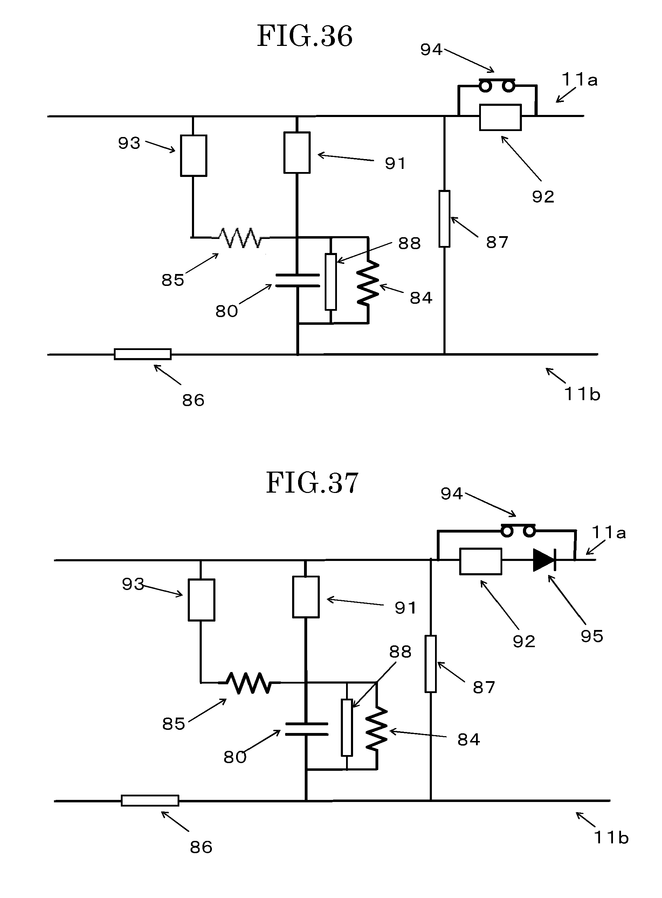

As shown in FIG. 36, fast-speed semiconductor switches 91, 92, and 93, such as IGBTs or FETs, can be used as the switches 81, 82, and 83. When, however, the semiconductor switch 92 is used as the switch 82, a voltage drop of 1 to 5 V or so may occur. In order to prevent such a voltage loss from occurring during the through operation, a relay 94 is connected in parallel with the semiconductor switch 92.

In this case, since the operation speed of the relay 94 is slow, the on/off operation is performed through the following procedures. That is, the relay 94 is turned off and the semiconductor switch 92 is turned on in the through operation. Hence, a current from the PV panel 1 in the normal operation is bypassed to the relay 94, and thus the voltage loss by the semiconductor switch 92 can be eliminated.

Conversely, in the impedance variable operation, after the capacitor 80 is charged, and before the semiconductor switch 91 is turned off, the semiconductor switch 92 is turned off and then the relay 94 is turned on. Next, at the start of a measurement, the semiconductor switch 91 is turned off and the semiconductor switch 92 is turned on to start the measurement. After the measurement, along with turning off the semiconductor switch 92, the semiconductor switch 91 is immediately turned on and the relay 94 is caused to start a turn-off operation. After the relay 94 is turned off, the semiconductor switch 92 is turned on to return to the normal operation.

Depending on the power generation system, the backflow preventing diode 15 connected between the strings S and shown in FIG. 15, etc., is not connected. In this case, as shown in FIG. 37, a diode 95 is connected in series with the semiconductor switch 92. This makes it possible to suppress a backflow. Since a current in the through operation is bypassed by the relay 94, no voltage drop by the diode 95 occurs.

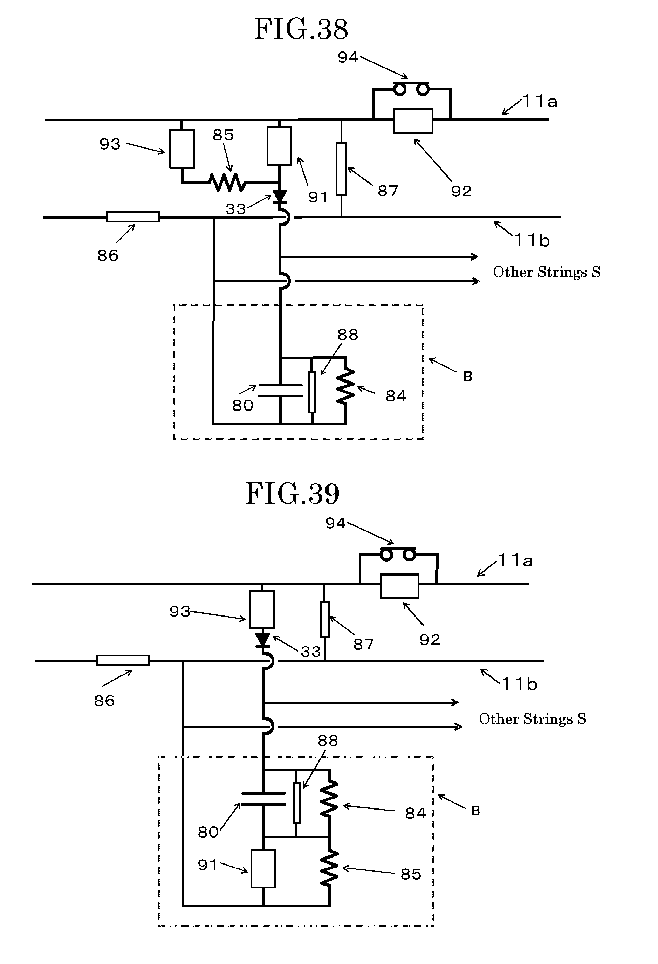

As shown in FIG. 38, a configuration can be employed in which the capacitor 80 that occupies the large part of the volume and the capacity of the impedance adjusting circuit 6 or 7 is commonly used by the plurality of strings S. This configuration is an example case in which the capacitor 80, the discharging resistor 84 and the voltage measuring element 88 in each impedance adjusting circuit 6 or 7 are separated and commonly used for the plurality of strings S, and retained in a capacitor charging box B. That is, both terminals of the capacitor 80 connected in parallel with the discharging resistor 84 and the voltage measuring element 88 are respectively connected to the semiconductor switch 91 in each string S through the diode 33 of each string S and the low-voltage power line 11b in each string S. The diode 33 is a backflow preventing diode that prevents a current from the other string S from flowing during measurement. For example, the diode 33 is required when an IGTB is used for the semiconductor switch 91 or 93 since the IGBT does not have the backflow preventing function. The diode 33 may not be connected when an element with the backflow preventing function such as FET is used for the semiconductor switch 91 or 93.

The operation according to this configuration is basically the same as that of the above-explained configuration. When, however, the number of strings S is large, the impedance adjusting circuit 6 or 7 of all strings S cannot use the capacitor 80 simultaneously. Hence, only the impedance adjusting circuit 6 or 7 of some strings S simultaneously uses the capacitor 80. Alternatively, the impedance adjusting circuit 6 or 7 of respective strings S uses the capacitor 80 in sequence.

FIG. 39 also shows a configuration in which it is attempted to commonly use the capacitor 80 like the configuration in FIG. 38. The configuration shown in FIG. 39 is, however, an example in which the semiconductor switch 91 in addition to the capacitor 80, the discharging resistor 84, and the voltage measuring element 88 in the impedance adjusting circuit 6 or 7, is also separated and commonly used for the plurality of strings S, and is retained in the capacitor charging box B. That is, the semiconductor switch 91 and the charging resistor 85 are connected in parallel between the capacitor 80 and the low-voltage power line 11b in each string S. The other configurations are the same as those of FIG. 38. Moreover, the diode 33 is required when an IGTB is used for the semiconductor switch 91 or 93 since the IGBT does not have the backflow preventing function. The diode 33 may not be connected when an element with the backflow preventing function such as FET is used for the semiconductor switch 91 or 93.

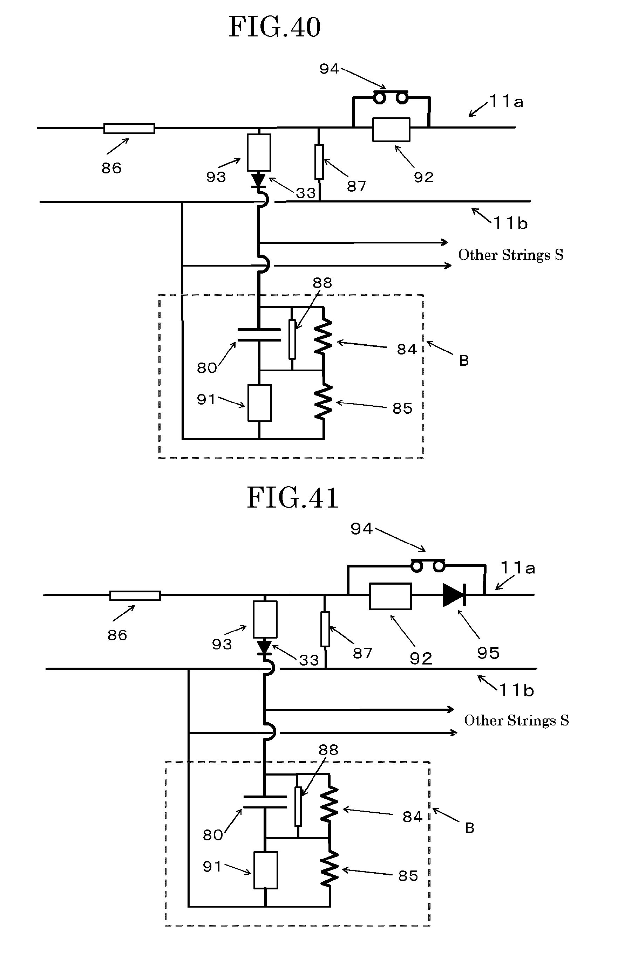

As shown in FIG. 40, the current measuring element 86 may be provided on the power line 11a of the string S. That is, the current measuring element 86 can be connected to either one of the power lines 11a and 11b of the string S as long as it is placed at a location where a current is correctly measurable.

Depending on the power generation system, the backflow preventing diode 15 connected between the strings S and shown in FIG. 15, etc., is not connected. According to the embodiment shown in FIG. 38 and following figures in which it is attempted to commonly use the capacitor 80, like the configuration shown in FIG. 37, the diode 95 is connected in series with the semiconductor switch 92, thereby suppressing a backflow. FIG. 41 shows a configuration in which such a configuration is applied to the example shown in FIG. 40. Since a current in the through operation is bypassed by the relay 94, no voltage drop due to the diode 95 occurs.
(4) All of or some of respective processing units (including a CPU) configuring the impedance control unit, the variable-range setting unit, the diagnosis process unit, the memory unit, the impedance adjusting circuit, the controller, the relay device, the PCS, the gateway, and the server device, etc., may be realized by a solo computer or may be realized by a plurality of computers connected through a communication network or signal lines. Moreover, all of or a part of the diagnosis device may be provided at the impedance-adjusting-circuit side. For example, all of or a part of the impedance control unit and the variable-range setting unit may be provided at the impedance-adjusting-circuit side. Furthermore, the impedance adjusting circuit may be configured together with the controller.
(5) The change-amount determining unit and the specifying unit can be omitted. For example, the memory unit stores, as the measured value, the voltage or the current measured through the PV panel circuit in accordance with the change in the impedance by the adjusting unit. Next, the display control unit displays the measured value before the impedance change and the measured value after the impedance change in a comparative manner. This enables the user to determine the deterioration for a PV panel and a string having a remarkable change.
(6) The detailed contents and values of information utilized in the above-explained embodiments are optional, and are not limited to any specific contents and numeric values. In the above-explained embodiment, it is optional whether or not to determine, in a largeness determination or an inconsistency determination with respect to a threshold, a value is included in such a threshold in terms of "equal to or greater than" and "equal to or smaller than" or to determine that a value is not included in such a threshold in terms of "greater than", "larger than", "smaller than", and "lower than".
(7) While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A PV panel diagnosis device comprising:
an adjusting unit that adjusts an impedance for a PV panel circuit connected with a plurality of PV panels;
a measured-value storing unit that stores, as a measured value, a voltage or a current measured through the PV panel circuit in accordance with a change in the impedance by the adjusting unit; and
a specifying unit which specifies a deteriorated PV panel based on a comparison result of the measured value in accordance with the change in the impedance by the adjusting unit or a change amount of the measured value with a predetermined threshold, and which also specifies a string comprising the plurality of PV panels connected in series and including the deteriorated panel.

2. The PV panel diagnosis device according to claim 1, wherein the threshold includes a preset threshold or a threshold calculated with reference to a value set from the measured value based on a principle of majority rule.

3. The PV panel diagnosis device according to claim 1 or 2, further comprising a display control unit which is connected to a display device and which causes the display device to display the voltage or the current measured through the PV panel circuit in accordance with the change in the impedance by the adjusting unit.

4. The PV panel diagnosis device according to any one of the preceding claims, wherein the adjusting unit adjusts an input impedance of a power control device connected with the PV panel circuit.

5. The PV panel diagnosis device according to any one of the preceding claims, wherein the adjusting unit adjusts the impedance for each plural strings.

6. The PV panel diagnosis device according to any one of the preceding claims, wherein the measured value includes an operating voltage or an operating current of each PV panel or of each of a plurality of strings connected in series.

7. The PV panel diagnosis device according to any one of the preceding claims, further comprising a recovery-predicted-value calculating unit that calculates, based on the measured value stored in the measured-value storing unit, an recovered output value predicted when a deteriorated PV panel is replaced with a normal PV panel.

8. The PV panel diagnosis device according to any one of the preceding claims, wherein
the adjusting unit is connected to an impedance adjusting circuit, and
the impedance adjusting circuit is a DC-DC converter.

9. The PV panel diagnosis device according to claim 8, wherein the DC-DC converter comprises a through circuit.

10. The PV panel diagnosis device according to claim 8 or 9,further comprising:
an output-reduction-rate calculating unit that calculates an output reduction rate of the string from a condition before the impedance is changed to a condition after the impedance is changed based on the measured value; and
a mode setting unit that sets an operation mode between a converter-operated mode in which the DC-DC converter is operated and a through mode in which no DC-DC converter is operated based on a conversion efficiency of the DC-DC converter and the output reduction rate.

11. The PV panel diagnosis device according to claim 5, wherein
a boost/step-down ratio of the voltage or the current for adjusting the impedance by the adjusting unit is set in advance,
the PV panel diagnosis device further comprises:
a measuring unit which performs an MPP control through a PCS connected to the plurality of the strings, and which measures an operating voltage or an operating current of the string operated at a different impedance changed by the adjusting unit; and
a variable-range determining unit that determines a variable range of a voltage value or a current value for adjusting the impedance by the adjusting unit based on the operating voltage or the operating current measured by the measuring unit and the boost/step-down ratio, and
the measured-value storing unit stores, as the measured value, a voltage value or a current value measured through the string in accordance with a change in the impedance by the adjusting unit based on the variable range determined by the variable-range determining unit.

12. The PV panel diagnosis device according to claim 11, further comprising:
a combination setting unit that sets a combination of a string subjected to an impedance adjustment and a string subjected to no impedance adjustment based on a preset ratio; and
a change control unit that changes a condition between a condition in which the impedance adjusting circuit adjusts the impedance and a condition in which the impedance adjusting circuit does not adjust the impedance based on the combination set by the combination setting unit, and
wherein a measurement by the measuring unit is carried out in accordance with a change by the change control unit so as to operate the string subjected to the impedance adjustment and the string subjected to no impedance adjustment.

13. The PV panel diagnosis device according to claim 11 or 12, further comprising a boost/step-down ratio setting unit that sets any one of a boost ratio, a step-down ratio, and a boost/step-down ratio of the voltage value as the boost/step-down ratio.

14. The PV panel diagnosis device according to any one of the preceding claims, wherein
the adjusting unit is connected to the impedance adjusting circuit, and
the impedance adjusting circuit comprises a capacitor and a switch connected in series which are connected in parallel to the power line.

15. A PV panel diagnosis method executed by a computer or an electronic circuit, the method comprising:
an adjusting process of adjusting an impedance for a PV panel circuit connected with a plurality of PV panels;
a measured-value storing process of storing, as a measured value, a voltage or a current measured through the PV panel circuit in accordance with a change in the impedance through the adjusting process; and
a specifying process of specifying a deteriorated PV panel based on a comparison result of the measured value in accordance with the change in the impedance through the adjusting process or a change amount of the measured value with a predetermined threshold and of also specifying a string comprising the plurality of PV panels connected in series and including the deteriorated panel.

16. The PV panel diagnosis method according to claim 15 executed by a computer or an electronic circuit, the method further comprising:
a process of setting in advance a boost/step-down ratio of a voltage value or a current value for adjusting the impedance through the adjusting process;
a measuring process of performing an MPP control through a PCS connected to the plurality of the strings, and of measuring an operating voltage or an operating current of the string operated at a different impedance changed through the adjusting process; and
a variable-range determining process of determining a variable range of a voltage value or a current value for adjusting the impedance through the adjusting process based on the operating voltage or the operating current measured through the measuring process and the boost/step-down ratio,
wherein the measured-value storing process stores, as the measured value, a voltage value or a current value measured through the string in accordance with a change in the impedance through the adjusting process based on the variable range determined through the variable-range determining process.

17. A PV panel diagnosis program allows a computer to execute the PV panel diagnosis method according to claim 15 or 16.
